(19) Europäisches Patentamt / European Patent Office / Office européen des brevets

(11) **EP 2 229 257 B1**

(12) **EUROPÄISCHE PATENTSCHRIFT**

(45) Veröffentlichungstag und Bekanntmachung des Hinweises auf die Patenterteilung:
**24.07.2013 Patentblatt 2013/30**

(21) Anmeldenummer: 08859233.2

(22) Anmeldetag: **12.12.2008**

(51) Int Cl.:
***B23G 5/06*** *(2006.01)*

(86) Internationale Anmeldenummer:
**PCT/EP2008/010609**

(87) Internationale Veröffentlichungsnummer:
**WO 2009/074343 (18.06.2009 Gazette 2009/25)**

(54) **GEWINDEBOHRER UND VERFAHREN ZUR HERSTELLUNG EINES GEWINDEBOHRERS**

SCREW TAP AND METHOD FOR THE PRODUCTION OF A SCREW TAP

TARAUD ET PROCÉDÉ POUR PRODUIRE UN TARAUD

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **12.12.2007 DE 102007060354**

(43) Veröffentlichungstag der Anmeldung:
**22.09.2010 Patentblatt 2010/38**

(73) Patentinhaber: **EMUGE-Werk Richard Glimpel GmbH & Co.KG Fabrik für Präzisionswerkzeuge**
**91207 Lauf a.d. Pegnitz (DE)**

(72) Erfinder:
• **GLIMPEL, Helmut**
**91207 Lauf (DE)**
• **BERSCHNEIDER, Thomas**
**91249 Weigendorf (DE)**
• **HECHTLE, Dietmar**
**91257 Pegnitz (DE)**
• **ZEUS, Thomas**
**91217 Hersbruck (DE)**

(74) Vertreter: **Schröer, Gernot H. et al**
**Meissner, Bolte & Partner GbR**
**Bankgasse 3**
**90402 Nürnberg (DE)**

(56) Entgegenhaltungen:
EP-A- 1 864 736    WO-A-2008/048853
SU-A1- 1 235 673    US-A- 3 021 538
US-A1- 2005 042 049

**Beschreibung**

Die Erfindung betrifft einen Gewindebohre gemäß Oberbegriff des Anspruchs 1 und ein Verfahren zur Herstellung eines Gewindebohrers gemäß Oberbegriff des Anspruchs 15. Ein solchen Gewindebohrer und ein solches Verfahren sind aus der US-A-3021538 bekannt.

Aus Handbuch der Gewindetechnik und Frästechnik, Herausgeber: EMUGE-FRANKEN, Verlag: Publicis Corporate Publishing, Erscheinungsjahr: 2004 (ISBN 3-89578-232-7), im Folgenden nur als "EMUGE-Handbuch" bezeichnet, sind im Kapitel 8, Seiten 181 bis 298 verschiedene Ausführungsformen von Gewindebohrern und Verfahren zum Gewindebohren bekannt.

Gewindebohrer sind Werkzeuge zum spanenden Erzeugen von Gewinden, die an einem Ende mit einem Schaft in einer Werkzeugaufnahme oder einem Spannfutter befestigbar sind und an dem anderen Ende einen Arbeitsbereich aufweisen mit Gewindeschneiden oder Gewindeschneidzähnen zum Schneiden des Gewindes in das Werkstück. Die Gewindeschneidzähne sind voneinander beabstandet entlang einer Spirale oder Schraubenlinie angeordnet, deren Steigung dem zu erzeugenden Gewinde entspricht. Im Querschnitt senkrecht zur Schneidrichtung oder zur Schraubenlinie sind die Gewindeschneidzähne an das zu erzeugende Gewindeprofil angepasst und weisen daher am radial am Weitesten nach außen angeordneten Zahnkopf Außenschneiden oder Kopfschneiden auf zum Schneiden des Gewindegrundes und seitlich in der Regel Flankenschneiden zum Schneiden von Gewindeflanken.

Ein Gewindebohrer weist in der Regel einen Anschnittbereich, in dem der maximale radiale Abstand der Kopfschneiden der Gewindeschneidzähne von dem Ende des Gewindebohrers axial nach hinten linear oder treppenförmig zunimmt, und ferner einen an den Anschnittsbereich sich axial anschließenden Führungsbereich auf, in dem der radiale Abstand der Kopfschneiden der Gewindeschneidzähne zunächst konstant bleibt und dann meist wieder leicht konisch abnimmt. Für den Anschnittbereich sind hinsichtlich dessen Anschnittlänge, Anschnittdurchmesser und Anschnittwinkel unterschiedliche Anschnittformen bekannt, wobei die Anschnittlänge hinsichtlich der Länge der Gewindelöcher relevant ist. Es gibt nach DIN Anschnittsformen A, B, C, D und E, die sich in der Anzahl der Gänge im Anschnitt, Anschnittsbereich und im Einstellwinkel unterscheiden. Die Anschnittsform A hat beispielsweise sechs bis acht Gänge im Anschnittsbereich und einen Einstellwinkel von ungefähr 5°, die Anschnittsform B eine Anzahl von 3,5 bis 5,5 Gänge im Anschnittsbereich und einen Einstellwinkel von 8° und die Anschnittsform C eine Anzahl der Gänge von zwei bis drei und einen Einstellwinkel von 15°.

Beim Gewindebohren wird der Gewindebohrer um seine Längsachse als Drehachse gedreht und gleichzeitig mit einer zur Drehachse axialen Vorschubbewegung in das Werkstück hineinbewegt, wobei die axiale Vorschubgeschwindigkeit von der Drehgeschwindigkeit und der Steigung abhängig ist. Mit Gewindebohrern werden Innengewinde in vorgearbeiteten Durchgangsbohrungen oder auch Sackbohrungen oder Grundlöchern erzeugt, wobei die Gewindeschneidzähne kontinuierlich in Eingriff mit der Werkstückoberfläche sind (kontinuierlicher Schnitt). Zur Spanabfuhr weisen die Gewindebohrer zwischen benachbarten Gewindeschneidzähnen in der Regel Spannuten auf, die gerade oder axial zur Drehachse oder auch spiralig im Drehsinn des Gewindebohrers oder entgegengesetzt zum Drehsinn verlaufen können. Ein Gewindebohrer kann nur in einer Schneidrichtung (Rechtslauf oder Linkslauf) schneiden und somit entweder nur Rechtsgewinde oder nur Linksgewinde erzeugen. Beim Schneidvorgang oder Gewindebohren schneidet der Gewindebohrer beim Eindrehen in die Bohrung des Werkstücks bis zum Eingriff aller Anschnittgewindeschneidzähne an und dann wird der Gewindebohrer abgebremst bis zur maximalen Eindringtiefe. Wenn das gesamte Gewinde in das Werkstück eingeschnitten ist, wird der Gewindebohrer durch Umschalten der Drehrichtung und der axialen Vorschubrichtung in einer Rückwärtsbewegung einem oder Rücklauf wieder aus dem erzeugten Gewinde herausgedreht. Beim Rücklauf wird mit dem Zahnstegrücken des Gewindebohrers der in der Bohrung stehen gebliebene Span der Folgeschneide abgeschert. Bei der weiteren Rückwärtsbewegung wird die nach der Spanabscherung verbliebene Spanwurzel in einen Spalt, dessen Größe abhängig ist vom Freiwinkel des Gewindebohrers, weiter zurückgequetscht. Im Anschluss wird bei einer weiteren Rückwärtsbewegung unter der Einwirkung der Gleitreibung der Gewindebohrer ganz aus dem Werkstück herausgedreht.

Als Werkstoff für den Gewindebohrer sind in den meisten Fällen zumindest als Schneidstoff im Schneidteil oder am Arbeitsbereich Schnellarbeitsstähle, insbesondere HSS für normale Beanspruchung oder HSS-E für höhere Beanspruchung im Einsatz, es können aber auch PM-Stähle eingesetzt werden.

Ferner sind auch Gewindebohrer aus Hartmetall bekannt, wobei man unter Hartmetall meist gesinterte oder zementierte ("cemented") Metallcarbide, insbesondere Wolframcarbid, gegebenenfalls legiert oder gemischt mit Metallen oder anderen Metallcarbiden, versteht, wobei man bei Gewindebohrern, bei denen Schaft und Arbeitsbereich aus Hartmetall bestehen, man von Vollhartmetall (VHM) spricht und bei Gewindebohrern, bei denen der Schneidenteil aus Hartmetall besteht und der Schaft aus Werkzeugstahl, von Kopfhartmetall (KHM). Es sind auch eingelötete, eingeschraubte oder geklemmte Hartmetallleisten mit Gewindeschneidzähnen bekannt.

Hartmetall-Gewindebohrer haben aufgrund der größeren Materialhärte und höheren Druckfestigkeit und der größeren Temperaturstabilität Vorzüge gegenüber Gewindebohrern aus Schnellstahl, beispielsweise theoretisch eine höhere Rotationsgeschwindigkeit und höhere Standzeit. Hartmetall-Gewindebohrer sind vorteilhaft zum Bohren von Gewinden in Graugusseisen (GG) oder Aluminium im Einsatz. Jedoch haben Gewindebohrer aus Hartmetall in Stählen eine vergleichsweise geringe Standzeit, die meist kleiner ist als bei vergleichbaren HSS- oder HSS-E-Gewindebohrern. Die geringeren Standzeiten bei Hartmetall-Gewindebohrern resultieren vermutlich daher, dass die Gewindeschneiden aufgrund der höheren Sprödigkeit und geringeren Elastizität sowie geringeren Bruchfestigkeit und Zähigkeit von Hartmetall gegenüber Schnellstahl vorzeitig brechen oder teilweise abreißen oder abgetragen werden.

Zur Erhöhung der Standzeiten und zur Verringerung des Gleitwiderstandes und der Aufschweißneigung werden Gewindebohrer sowohl aus Schnellstahl als auch aus Hartmetall oft zusätzlich oberflächenbehandelt, vom einfachen Nitrieren bis zu einer modernen Hartstoffbeschichtung, beispielsweise Hartverchromung, Beschichtung mit Chromnitrid, Titannitrid, Titankarbonnitrid oder Titanaluminiumnitrid.

In US 7,147,939 B2 wird zur Erhöhung der Standzeit ein Hartmetall-Gewindebohrer mit einem Trägerkörper aus Wolframcarbid legiert mit Kobalt in einem Bereich von 14 bis 16 Gew.-% und mit einer mit einem Gradienten versehenen Verschleißschutzschicht aus Metallnitrid, Karbid, Karbonnitrid, Borid und/oder Oxid, wobei das Metall Aluminium, Silizium oder ein Übergangsmetall aus einer der Periodensystemgruppen IVa, Va und VIa ist, sowie mit einer äußeren Schicht mit Molybdändisulfid zum Verringern von Reibung über der Verschleißschutzschicht vorgeschlagen. Es wird ausgeführt, dass die Standzeit in 33 HRC AISI 4340 Stahl höher war als bei einem konventionell mit Titannitrid beschichteten HSS Gewindebohrer.

In US 7,147,413 B2 und zugehöriger US 7,207,867 B2 wird zur Erhöhung der Standzeit ein Hartmetall-Gewindebohrer vorgeschlagen mit einem zylindrischen Schaft und einem Gewindeerzeugungsbereich mit einem Anschnittsbereich, der mit einer Verschleißschutzschicht aus Metallnitrid, Karbid, Karbonnitrid, Borid und/oder Oxid, wobei das Metall Aluminium, Silizium oder ein Übergangsmetall der Periodensystemgruppen IVa, Va und VIa ist und mit einer weiteren äußeren Schicht, die Molybdändisulfid enthält, beschichtet ist. Der zylindrische Schaft ist mit einem hydraulischen Präzisionshalter während des Schleifens gehalten, so dass der Gewindeerzeugungsbereich und der Anschnittsbereich konzentrisch zu dem zylindrischen Schaft innerhalb einer Toleranz von 10 μm sind.

Die in Schneidrichtung zeigenden Schneidkanten der Gewindeschneidzähne werden beim Schleifen von Gewindebohrern möglichst scharf ausgebildet, damit ein scharfer und glatter Schnitt des Gewindes möglich ist, oder, mit anderen Worten, werden Verrundungen an den Schneidkanten möglichst gering gehalten.

Beim Schleifen von Gewindebohreren aus Schnellstahl entstehen nun jedoch in der Regel an den Schneidkanten Grate, die zu schlechten Gewinden am Anfang der Einsatzzeit des Gewindebohrers führen. Deshalb ist bekannt, vor dem ersten Einsatz des Gewindebohrers durch einen Entgratungsvorgang mit Bürsten oder durch Strahlschleifen oder Strahlspanen mit abrasivem Material oder mit einem Hochdruckwasserstrahl die Grate an den Schneiden zu entfernen. Dadurch werden die Schneidkanten des Gewindebohrers aus Schnellstahl jedoch leicht verrundet.

Bei Gewindebohrern aus Hartmetall entsteht kein Grat beim Schleifen der Gewindeschneidkanten, da Hartmetall anders zerspant und ein anderes Umformverhalten aufweist beim Schleifen als Schnellarbeitsstahl. Deshalb ist bei einem Hartmetall-Gewindebohrer auch kein Entgratungsvorgang erforderlich.

Wenn auf den Werkstoff des Gewindebohrers zusätzlich Hartstoffbeschichtungen aufgebracht werden, werden die Schneidkanten ebenfalls leicht abgerundet.

Eine deutliche Verrundung entsteht dann im Einsatz des Gewindebohrers durch den Verschleiß, weshalb Gewindebohrer dann auch häufig nachgeschliffen werden, um wieder scharfe Schneidkanten herzustellen.

Gemäß dem Stand der Technik werden bei Gewindebohrern die vorgenannten technologisch bedingten, jedoch an sich unerwünschten Verrundungen an den Schneidkanten möglichst klein gehalten, typischerweise unterhalb eines Krümmungsradius in der Größenordnung von 1 μm bis maximal 10μ m. Größere Krümmungsradien und damit kleinere Krümmungen werden von der Fachwelt als Verschleiß betrachtet, der den Gewindebohrer nicht einsatzfähig machen würde.

Es ist nun Aufgabe der Erfindung, einen Gewindebohrer und ein Verfahren zum Herstellen eines Gewindebohrers anzugeben, bei denen eine gute Standzeit des Gewindebohrers erreicht, auch bei Ausbildung der Gewindeschneiden aus Hartmetall.

Diese Aufgabe wird hinsichtlich des Gewindebohrers mit den Merkmalen des Patentanspruchs 1 und hinsichtlich des Verfahrens mit den Merkmalen des Patentanspruchs 15 gelöst. Vorteilhafte Ausgestaltungen und Weiterbildungen ergeben sich aus den jeweils abhängigen Patentansprüchen.

Die Erfindung beruht nun auf der überraschenden Erkenntnis, dass mit einer gezielten und definierten Verrundung (oder: abgerundeter oder verrundeter Gestaltung oder Präparation) zumindest eines Teils der Schneidkanten von Gewindeschneidzähnen, zumindest im Bereich der Außenschneiden oder Kopfschneiden, eines Gewindebohrers die Standzeit eines Gewindebohrers gegenüber demselben Gewindebohrer ohne diese Verrundung (oder: Gestaltung oder Präparation) erhöht werden kann, selbst wenn die Gewindeschneidkanten aus Hartmetall bestehen und Gewinde in Stahl geschnitten werden, indem die Krümmung der Schneidenverrundung und/oder die Reduktionstiefe (oder: Abtragtiefe) der verrundeten Schneidkante im Vergleich zur idealen Keilform (oder: zur unverrundeten Schneidkante) in Abhängigkeit von wenigstens den zwei Parametern

- Anzahl der Gewindeschneidzähne im Anschnittbereich und

- Gewindesteigung

und vorzugsweise auch noch von dem dritten Parameter

- Anstieg oder Zunahme des maximalen radialen Abstandes der Außenschneiden oder Kopfschneiden der Gewindeschneidzähne (oder: der gemäß dem Gewindeprofil geformten Gewindeschneiden) über den Anschnittbereich entsprechend dem Verlauf der radialen Abstandsfunktion im Anschnittsbereich

gewählt werden oder wird.

Dabei werden in einer vorteilhaften Ausführungsform die Krümmungen der Schneidkantenverrundungen der Gewindeschneidzähne im Anschnittbereich zumindest im Mittel größer (oder entsprechend die Krümmungsradien kleiner) gewählt oder eingestellt, wenn

- die Anzahl der Gewindeschneidzähne im Anschnittbereich größer ist, unter der Voraussetzung gleicher radialer Abstandsfunktion und/oder gleicher Gewindesteigung

- die Zunahme des maximalen radialen Abstandes über den gesamten Anschnittbereich gemäß der radialen Abstandsfunktion kleiner ist, unter der Voraussetzung gleicher Anzahl der Gewindeschneidzähne im Anschnittbereich und/oder gleicher Gewindesteigung.

- die Gewindesteigung kleiner ist, unter der Voraussetzung gleicher radialer Abstandsfunktion und/oder gleicher Anzahl der Gewindeschneidzähne im Anschnittbereich.

Ferner werden in einer vorteilhaften Ausführungsform die Reduktionstiefen der Schneidkantenverrundungen der Gewindeschneidzähne im Anschnittbereich zumindest im Mittel kleiner gewählt oder eingestellt, wenn

- die Anzahl der Gewindeschneidzähne im Anschnittbereich größer ist, unter der Voraussetzung gleicher radialer Abstandsfunktion und/oder gleicher Gewindesteigung

- die Zunahme des maximalen radialen Abstandes über den gesamten Anschnittbereich gemäß der radialen Abstandsfunktion kleiner ist, unter der Voraussetzung gleicher Anzahl der Gewindeschneidzähne im Anschnittbereich und/oder gleicher Gewindesteigung.

- die Gewindesteigung kleiner ist, unter der Voraussetzung gleicher radialer Abstandsfunktion und/oder gleicher Anzahl der Gewindeschneidzähne im Anschnittbereich.

Eine radiale Richtung ist dabei als senkrecht zur Werkzeugachse durch diese oder von dieser weg verlaufend definiert und eine axiale Richtung ist als entlang der oder parallel zur Werkzeugachse verlaufend definiert.

Die Gewindesteigung kann als axialer Abstand zweier entsprechender Punkte axial benachbarter Gewindeschneidzähne oder Zwischenlücken oder auch als Steigung oder Steigungswinkel des Gewindes oder der Schraubenlinie der Anordnung der Schneidzähne definiert sein, beispielsweise gemäß DIN 2244.

Die Krümmung der verrundeten Schneide oder Schneidkante wird an einer Projektions- oder Schnittlinie oder -kurve in einer Projektions- oder Schnittebene bestimmt, wobei die Schnitt- oder Projektionsebene insbesondere entweder quer zur Schneidkante oder die Schneidrichtung enthaltend und gegebenenfalls unter dem Steigungswinkel der Schraubenlinie der Anordnung der Gewindeschneidzähne oder vorzugsweise in einer Ebene senkrecht zur Drehachse (bei Außen- oder Kopfschneiden) oder in einer Ebene parallel zur Drehachse (bei Flankenschneiden) verläuft. Die Projektions- oder Schnittkurve der verrundeten Schneidkante in der Projektions- oder Schnittebene verläuft somit in einer Richtung zwischen Spanfläche und Freifläche.

An einer solchen Projektions- oder Schnittkurve kann somit beispielsweise durch Abtasten mittels eines an sich bekannten Tasters zur Bestimmung einer Schneidkantenverrundung die Krümmung oder der Krümmungsradius gemessen werden, wobei die Schneidkante wenigstens teilweise abgefahren wird von Spanfläche zu Freifläche oder umgekehrt und eine Änderung der Tasterposition ausgewertet wird.

Der Ort an der Schneidkante, an dem die Projektions- oder Schnittebene die Schneidkante durchläuft oder schneidet und an dem somit die Schneidkantenverrundung gemessen oder bestimmt wird, kann an unterschiedliche Orte entlang der Schneidkante gelegt werden. Bevorzugt ist eine Messung in der Mitte oder mittig der Kopfschneide. Wenn die Flankenschneidkanten auch verrundet werden, wird eine Messposition bevorzugt am Flankendurchmesser oder in einer mittleren Position an den Flankenschneiden gelegt. Es können aber auch mehrere Messpunkte entlang der Schneidkante vorgesehen werden und mehrere dort bestimmte Krümmungsradien oder Krümmungen verwendet werden oder auch eine Mittelung über die dort bestimmten mehreren Krümmungsradien oder Krümmungen vorgenommen werden zur Bestimmung einer mittleren Krümmung dieser Schneidkante oder dieses Schneidkantenabschnitts, beispielsweise der Kopfschneide.

Die Krümmung der verrundeten Schneidkante an einem Messpunkt ergibt sich dann aus der zweiten Ableitung der Projektions- oder Schnittkurve der Schneidkante in der Projektions- oder Schnittebene an diesem Messpunkt. Der Krümmungsradius an einem Punkt an der Schneidekante entlang der Projektions- oder Schnittkurve ist der Radius des Krümmungskreises an diesem Punkt der Schneide, der Mittelpunkt des Krümmungskreises heißt Krümmungsmittelpunkt. Krümmungskreis und gekrümmte Projektions- oder Schnittkurve der verrundeten Schneidkante haben in diesem Punkt die gleiche Tangente oder der Normalenradiusvektor zwischen dem betrachteten Punkt und dem Krümmungsmittelpunkt steht senkrecht auf der Tangente an die Kurve. Der Krümmungsradius ist 1 dividiert durch den Betrag der Krümmung. Wenn also der Krümmungsradius größer ist, ist die Krümmung indirekt proportional dazu kleiner und umgekehrt. Der Krümmungsradius und damit die Krümmung ist nur bei einer Kreislinie oder kreisförmigen Verrundung der Schneidkante konstant, nimmt dort also nur einen einzigen Wert an. Bei allen anderen gekrümmten Kurven oder Verläufen verändert sich der Krümmungsradius und die Krümmung entlang der Kurve, ist also variabel und nimmt mehr als einen Wert an.

Die Schneidenverrundungen der Gewindeschneidzähne sind insbesondere mit gekrümmten Schneidenprofilkurven zwischen Spanfläche und Freifläche gebildet, die in einer Projektionsebene verlaufen, die insbesondere quer zur Schneide oder zu deren Spanfläche und Freifläche und/oder die Schnittrichtung enthaltend und gegebenenfalls unter dem Steigungswinkel der Schraubenlinie angeordnet ist.

In einer Ausgestaltung sind wenigstens abschnittsweise kreisbogen- oder kreislinienförmige Schneidenverrundungen oder Schneidenprofilkurven vorgesehen, die also konstante Krümmung aufweisen.

Es können aber auch in der Krümmung veränderliche Schneidenverrundungen oder Schneidenprofilkurven vorgesehen sein, wobei die Krümmung wenigstens eine Schneidenverrundung oder wenigstens eine Schneidenprofilkurve von der Spanfläche zur Freifläche hin zunehmen oder abnehmen kann oder von der Spanfläche zur Freifläche bis auf ein Maximum hin zunehmen und dann wieder abnehmen kann. Ferner kann in einem zentralen Bereich der Kopfschneiden die vorgegebene Krümmung der Schneidenverrundung vorgesehen sein und in Übergangsbereichen zu den Flankenbereichen oder Schneidecken der Gewindeschneidzähne eine andere Krümmung oder auch eine Kantenform praktisch ohne Krümmung vorgesehen sein.

Mögliche wenigstens abschnittsweise Verläufe wenigstens einer Schneidenverrundung oder wenigstens einer Schneidenprofilkurve sind beispielsweise durch eine oder mehrere der folgenden Funktionen vorgebbar: rationale oder gebrochen rationale Funktion n-ter Ordnung (wie Polynome oder Quotienten von Polynomen), eine Wurzel- oder Potenzfunktion, eine elliptische Funktion, eine Exponentialfunktion oder eine logarithmische Funktion, eine Spiralfunktion, insbesondere eine logarithmische oder archimedische Spirale, eine Zykloide oder eine, insbesondere durch Lagrange'sche Interpolationspolynome oder Spline-Funktionen, interpolierte Funktion.

Technologisch und abhängig vom Herstellprozess, mit dem die Verrundung erzeugt wird, hängt die Krümmung an den einzelnen Gewindeschneidzähnen auch von der betrachteten Stelle am Profil des Gewindeschneidzahnes ab und kann beispielsweise an den Kopfschneiden kleiner (Krümmungsradius größer) sein als an den Flankenschneiden und/oder an den Übergängen zwischen Kopfschneiden und Flankenschneiden kleiner sein (Krümmungsradius größer) als in den Kopfschneiden, und ferner von der Position des Gewindeschneidzahnes im Anschnittbereich. Beispielsweise kann die Verrundung stärker bzw. die Krümmung der Schneidkanten kleiner sein bei Gewindeschneidzähnen, die radial weiter außen liegen, also im axial vom Ende des Gewindebohrers am Weitesten weg liegenden Endbereich des Anschnittbereiches angeordnet sind, als bei Gewindeschneidzähnen, die radial weiter innen liegen, also sich im axial dem Ende des Gewindebohrers benachbarten Anfangsbereich des Anschnittbereiches befinden.

In Absolutwerten ergeben sich gemäß der Erfindung typischerweise Krümmungsradien der Schneidkantenverrundung, die in einem Bereich von 20 $\mu$m bis 100 $\mu$m, insbesondere von 25 $\mu$m bis 60 $\mu$m, variieren, und damit weit über den gemäß dem Stand der Technik als maximal zulässig angesehenen Werten liegen.

Diese Werte können insbesondere Maximalwerte an den jeweiligen Schneiden darstellen und auch entlang der Schneiden wieder etwas kleiner werden. Gerade in den Eckbereichen oder Übergängen zwischen Zahnkopf und Zahnflanken kann aber auch eine kleinere Krümmung oder großflächigere Schneidenverrundung realisiert sein.

Die Schneidenverrundungen und insbesondere ihre Krümmungsradien sind auch abhängig vom Werkstoff des Werkstücks, in den das Gewinde geschnitten wird, und/oder vom Werkstoff der Gewindeschneidzähne des Gewindebohrers.

Die radiale Abstandsfunktion der Kopfschneiden im Anschnittsbereich (oder: die axiale Zunahme des maximalen radialen Abstandes der Kopfschneiden) ist im Allgemeinen monoton, vorzugsweise streng monoton, wachsend. Unter monoton zunehmend wird eine Funktion verstanden, die zumindest abschnittsweise oder in Stufen oder auch kontinuierlich (streng monoton) zunimmt, d.h. der Funktionswert der radialen Abstandsfunktion für den maximalen radialen Abstand einer Gewindeschneide bei einem größeren axialen Abstand vom Ende des Gewindebohrers ist immer größer oder gleich dem Funktionswert einer Gewindeschneide bei einem kleineren axialen Abstand vom Ende des Gewindebohrers bei monotoner Zunahme und immer größer als dieser Funktionswert bei streng monotoner Zunahme.

Eine bevorzugte radiale Abstandsfunktion für den maximalen radialen Abstand der Kopfschneiden ist eine lineare Funktion oder auch eine Stufenfunktion oder Treppenfunktion des axialen Abstandes vom Ende des Gewindebohrers. Die radiale Abstandsfunktion für den maximalen radialen Abstand der Kopfschneiden kann aber auch gekrümmt und nicht-linear verlaufen und beispielsweise aus der eine rationale oder gebrochen rationale Funktion n-ter Ordnung, eine Wurzel- oder Potenzfunktion, eine elliptische Funktion, Exponentialfunktion oder eine logarithmische Funktion, eine Spiralfunktion, insbesondere eine logarithmische oder archimedische Spirale, eine Zykloide oder eine, insbesondere durch Lagrangesche Interpolationspolynome oder Spline-Funktionen, interpolierte Funktion umfassenden Gruppe von Funktionen ausgewählt sein.

Der Gewindebohrer besteht bevorzugt zumindest im Bereich der Gewindeschneidzähne wenigstens an den Kopfschneiden aus Hartmetall oder Metallcarbiden oder aus einem anderen, insbesondere spröden, Hartstoff, insbesondere polykristallinem Diamant (PKD), kubischem Bornitrid (CBN), Korund, einem Metallborid, insbesondere einem Magnesiumborid, oder einem Metallboridcarbid, insbesondere einem Magnesiumboridcarbid.

Aufgrund der definierten Schneidenverrundung werden die auf die Gewindeschneidzähne und deren Schneiden, insbesondere Kopfschneiden wirkenden Kräfte und Belastungen beim Schneiden aber insbesondere auch beim Rücklauf über die Spanwurzel, die bei Hartmetall nicht so gut durch eine Elastizität des Materials des Gewindebohrers ausgeglichen werden können wie bei Schnellarbeitsstahl, dennoch so weit reduziert, dass eine deutliche Standzeiterhöhung insbesondere bis zum Faktor 10 festgestellt werden konnte, gerade auch in langspanenden zähen Werkstoffen wie Stahl. Der derart gestaltete Gewindebohrer kann in einer Vielzahl von Stählen, insbesondere legierten Stählen, Einsatzstählen, Vergütungsstählen, Nitrierstählen, Kalt- oder Warm arbeitsstählen, Rost-, säure- und/oder hitzebeständigen Stählen oder Nickelbasislegierungen, jedoch auch in Titan und Titanlegierungen, Bronzen, Knet- oder Gußaluminium(legierungen), Stahlguß, Kupfer, Elektrokupfer, MMCs und weiteren Werkstoffen zum Gewindeschneiden eingesetzt werden.

Die Erfindung wird im Folgenden anhand von Ausführungsbeispielen weiter erläutert. dabei wird auch auf die Zeichnung Bezug genommen, in deren

FIG 1    ein Gewindebohrer in einer perspektivischen Längsansicht,

FIG 2    den Gewindebohrer gemäß FIG 1 in einer Stirnansicht,

FIG 3    ein Teilbereich des Gewindebohrers gemäß FIG 1 mit dem Anschnittbereich,

FIG 4    ein Gewindeschneidzahn in perspektivischer Ansicht,

FIG 5    eine Skizze zur Konstruktion eines Schneidkantenradius und

FIG 6    eine gemäß der Erfindung verrundete Schneidkante mit Reduktionstiefe

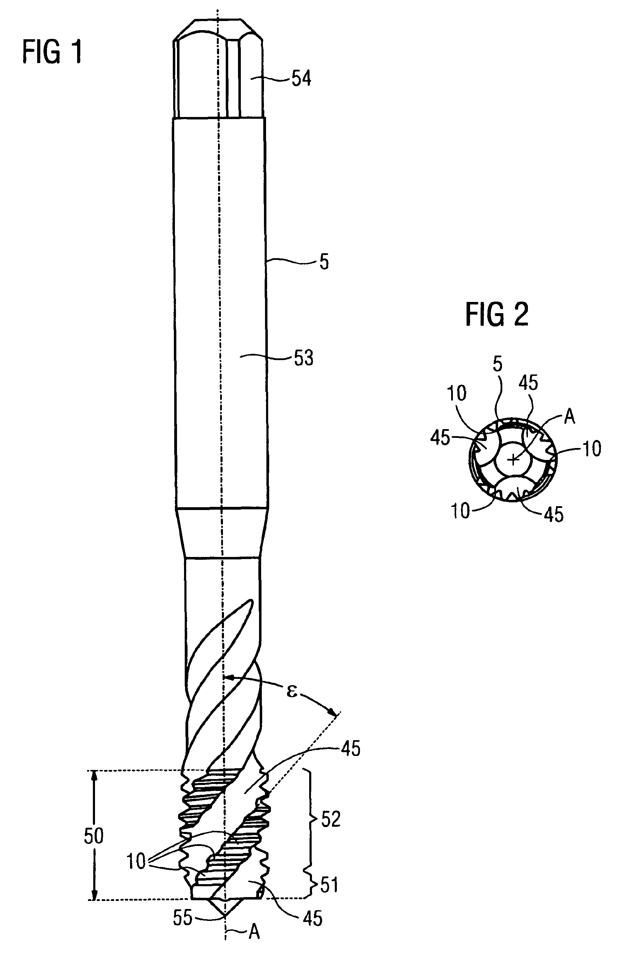

jeweils schematisch dargestellt sind. Einander entsprechende Teile und Größen sind in den FIG 1 bis 6 mit denselben Bezugszeichen versehen.

Der Gewindebohrer 5 gemäß FIG 1 bis 3 weist einen Schaft 53 auf mit einem Gewindeschneidbereich 50, der sich an ein freies Ende 55 anschließt, und einem Vierkant-Einspannbereich 54 zum formschlüssigen Einspannen in eine Werkzeugaufnahme oder ein Werkzeugfutter und Drehen des Gewindebohrers 5 um seine Drehachse A. Ein bevorzugtes Werkzeugfutter ist ein unter der Marke Softsynchro von der Anmelderin vertriebenes Futter oder auch ein Futter gemäß EP 0 887 135 B1.

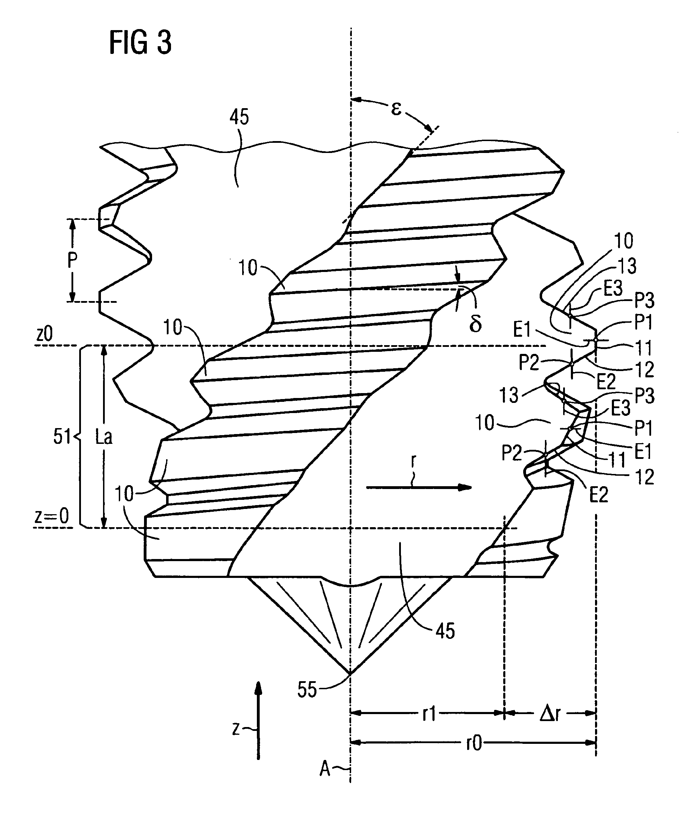

Im dargestellten Ausführungsbeispiel weist der Gewindebohrer 5 im Gewindeschneidbereich 50 drei Reihen von Gewindeschneidzähnen 10 auf, die jeweils entlang einer Spannut 45 zum Abführen der von den Gewindeschneidzähnen 10 beim Gewindeschneiden abgetragenen Späne unter einem Drallwinkel oder Seitenspanwinkel e (siehe FIG 1 und 3) von beispielsweise 45° angeordnet sind. Es können aber auch zwei oder mehr als drei Spannuten 45 vorgesehen sein. Die Gesamtheit der Gewindeschneidzähne 10 ist entlang einer spiralförmigen Anordnung unter der Gewindesteigung P und unter dem Steigungswinkel $\delta$ (siehe FIG 3) des zu erzeugenden Gewindes angeordnet.

Jeder Gewindeschneidzahn 10 weist eine radial außen angeordnete Kopfschneide 11 und nach innen verlaufende seitliche Schneiden oder Flankenschneiden 12 und 13 auf. Dargestellt sind exemplarisch Gewindeschneidzähne 10 für ein metrisches Gewinde, bei anderen Gewindearten und -formen wie z.B. Rundgewinden oder Trapezgewinden sind die Gewindeschneidzähne entsprechend in ihrer Gestalt angepasst.

Eine axiale Koordinate in zur Drehachse A von dem freien Ende 55 des Gewindebohrers weg gerichteter axialer Richtung r ist mit z und eine dazu oder senkrechte von der Drehachse nach außen verlaufende radiale Koordinate oder der Radius ist mit r bezeichnet. An das freie Ende 55, an dem beispielsweise eine Zentrierspitze angeordnet ist, schließt sich axial zunächst ein Bereich an, der bei Eingriff des Gewindebohrers in die Bohrung oder das Kernloch im Werkstück nicht in das Werkstück einschneidet (Toleranzbereich). Ab einem Anschnittbeginn bei dem axialen Wert $z = 0$ beginnt nun ein Anschnittbereich 51, ab dem die Gewindeschneidzähne 10 dann in das Werkstück sukzessive einschneiden also wirksam werden. Der radiale Abstand r oder die radiale Abstandfunktion $r(z)$ der Kopfschneiden 11 der Gewindeschneidzähne 10 nimmt dabei in zur Drehachse A axialer Richtung z vom Anschnittbeginn bei $z = 0$ kontinuierlich von einem Anfangsradius $r1 = r(0)$ bei $z = 0$ auf einen maximalen Außenradius $r0 = r(a0)$ bei dem axialen Abstand $z = z0$ am Ende des Anschnittbereichs 51 über die axiale Anschnittlänge $La = z0 - 0 = z0$ des Anschnittsbereichs 51 (siehe FIG 3) zu, d.h. um die Gesamtdifferenz $\Delta r = r0 - r1$. Der Anfangsradius r1 des ersten wirksamen Gewindeschneidzahnes entspricht dabei im Wesentlichen dem Radius des Kernloches, in dem das Gewinde zu erzeugen ist. Die Gewindeschneidzähne 10 im Anschnittbereich 51 arbeiten nun jeweils das Gewinde über eine Tiefe, die dem radialen Abstand zum Vorderzahn entspricht und abhängig von Δr und der Gesamtzahl Z der Zähne im Anschnittbereich 51, der sogenannten Anschnittzähne, ist, weiter in das Werkstück ein. Die Gesamttiefe des eingeschnittenen Gewindeganges ist dann Δr.

Im in FIG 1 bis 3 dargestellten Ausführungsbeispiel ist der radiale Abstand r eine lineare Funktion der axialen Koordinate z, so dass ein kegelförmiger Anschnittsbereich 51 verwirklicht ist. Dadurch ergibt sich, dass die Differenz ri+1 - ri oder Zunahme des radialen Abstandes r von einem i-ten Gewindeschneidzahn 10 zum unmittelbar benachbarten i+1-ten Gewindeschneidzahn 10 über den gesamten Anschnittbereich 51 im Wesentlichen gleich bleibt bei einem Wert von Δr / Z, also jeder Zahn in etwa einen Span gleicher Dicke abhebt. Die Funktion des radialen Abstandes r der Kopfschneiden 11 von der Drehachse A über den Anschnittbereich 51 muss aber keine lineare Funktion sein, sondern kann auch einer anderen monoton wachsenden Funktion über der z-Koordinate folgen, so dass sich beispielsweise ein konvex gekrümmter Anschnittsbereich ergibt mit einer axial zunehmenden oder abnehmenden Abstandsdifferenz ri+1 - ri und damit Einarbeitungstiefe oder Spandicke.

Die Anschnittslänge La und Zahl der Gewindegänge des Gewindeschneidbereiches 50 im Anschnittsbereich 51 wird bei verschiedenen Anschnittsformen unterschiedlich gewählt, wobei insbesondere die eingangs erwähnten DIN Anschnittsformen A, B, C, D und E zum Einsatz kommen können.

Abhängig von der Zahl der Gewindeschneidzähne 10 über den Umfang verteilt, die im Allgemeinen der Zahl der Spannuten 45 entspricht, ergibt sich eine Gesamtzahl Z von Anschnittzähnen, d.h. Gewindeschneidzähnen 10 im Anschnittsbereich 51, aus der Zahl der Spannuten 45 multipliziert mit der Zahl der Gewindegänge. Die Zahl der Gewindegänge im Anschnittbereich 51 wiederum ist abhängig von der Anschnittlänge La und der Gewindesteigung P, die dem axialen Abstand zweier Gewindeschneidzähne 10 an einer Spannut 45 oder den axialen Weg eines Gewindeschneidzahnes nach einem vollständigem Umlauf des Gewindebohrers entspricht.

Ferner weist der Gewindeschneidbereich 50 einen sich an den Anschnittbereich 51 axial zur Drehachse A anschließenden Führungsbereich 52 auf, in dem der radiale Abstand r der Kopfschneiden 11 der Gewindeschneidzähne 10 gleich bleibt bei dem Außenradius r0 oder auch wieder leicht abnimmt, jedoch nicht mehr zunimmt.

Es wird nun gemäß der Erfindung an den Kopfschneiden 11 und vorzugsweise auch an den Flankenschneiden 12 und 13 der Gewindeschneidzähne 10 zumindest im Anschnittsbereich 51, vorzugsweise auch im Führungsbereich 52, eine definierte Verrundung vorgenommen, mit der die Standzeit eines Gewindebohrers 5 erhöht werden kann, insbesondere eines Gewindebohrers aus Hartmetall oder einem anderen spröden Hartstoff beim Einsatz insbesondere in Stählen.

Wie in FIG 3 näher zu erkennen, wird die Verrundung an den Kopfschneiden 11 an einem mittleren oder zentral angeordneten Messpunkt P1 entlang dem Schneidenprofil von der Spanfläche zu der Freifläche oder umgekehrt in einer Projektionsebene E1 beispielsweise mittels eines an sich bekannten Tasters gemessen oder bestimmt, wobei die Projektionsebene E1 senkrecht zur Schneidkante gerichtet ist. Entsprechend werden die Verrundungen an den Flankenschneiden 12 und 13 an zugehörigen Messpunkten P2 und P3 durch Abtasten des Schneidenprofils von Spanfläche zur Freifläche jeweils in einer Projektionsebene E2 bzw. E3 senkrecht zur jeweiligen Schneidkante bestimmt. Es werden vorzugsweise die Verrundungen am ersten Gewindeschneidzahn 10 mit vollem Profil also am Ende des Anschnittsbereichs 51 im Übergang zum Führungsbereich 52 bestimmt, können aber auch an anderen Zähnen bestimmt werden (vergleiche FIG 3).

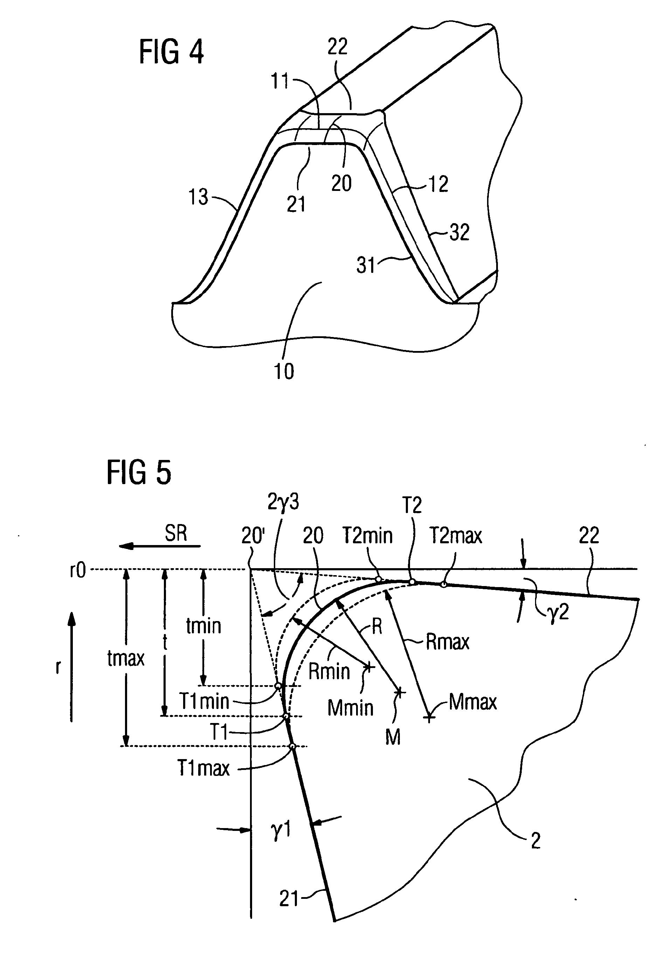

FIG 4 zeigt ein Beispiel eines gemäß der Erfindung sowohl an den Kopfschneiden 11 als auch den Flankenschneiden 12 und 13 verrundeten Gewindeschneidzahnes 10. Eine in der Mitte der Kopfschneide 11 betrachtete Schneidenverrundung oder Schneidenprofilkurve 20 von der Spanfläche 21 zur Freifläche 22 ist eingezeichnet. Ferner sind die Linien 31 und 32, die den Beginn der Schneidenverrundung an der Spanfläche 21 bzw. an der Freifläche 22 markieren eingezeichnet. Man erkennt, dass die Schneidenverrundung 20 sich im Wesentlichen parallel über die Kopfschneide 11 erstreckt anhand der Linien 31 und 32, jedoch, dass in den Schneideckenbereichen, wo die Kopfschneide 11 in die Flankenschneiden 12 und 13 übergeht, die Schneidenverrundung größer wird und die Krümmung etwas kleiner ist, anhand des dort zunehmenden Abstandes der beiden Linien 31 und 32, um dann in den Flankenschneiden 12 und 13 wieder annähernd konstant zu bleiben (wieder fast parallele Linien 31 und 32). Der Verlauf der Übergangslinien 31 und 32 kann aber auch anders sein. Beispielsweise können die Linien 31 und 32 nach unten entlang der Flankenschneiden 12 und 13 auch voneinander weglaufen oder einen größeren Abstand einnehmen.

FIG 5 zeigt nun ein Beispiel eines Verfahrens zur Bestimmung des Krümmungsradius für eine im Wesentlichen kreisförmige Schneidkantenverrundung. Dargestellt ist eine Projektion oder ein Schnitt durch eine keilförmige Schneide 2 eines Gewindeschneidzahnes von deren Spanfläche 21 zu deren Freifläche 22. Das sich ergebende Schneidenprofil entspricht dem Profil oder Rand der projizierten Schneide 2. Der Radius oder radiale Abstand von der nicht gezeigten Drehachse ist wieder mit r bezeichnet. SR ist die Schnittrichtung.

Es wird zunächst ausgegangen von einem ideal scharfen oder ideal keilförmigen Schneidenprofil (ideale Keilform), dessen Endpunkt 20' für eine unverrundete Schneidkante eingezeichnet ist bei einem Außenradius r0. Der Keilwinkel des ideal keilförmigen Schneidenprofils bei dem Endpunkt 20' ist mit 2 γ3 bezeichnet und entspricht dem Winkel zwischen dem geradlinigen Profilabschnitt der Spanfläche 21 oder der Spanfläche des ideal keilförmigen Schneidenprofils einerseits und dem geradlinigen Profilabschnitt der Freifläche 22 oder der Freifläche des ideal keilförmigen Schneidenprofils andererseits.

Es wird nun eine radiale Verrundungstiefe t ausgehend vom maximalen Außenradius r0 radial nach innen oder als radiale Tiefe ausgehend vom ursprünglichen Außenradius r0 festgelegt.

An dieser Verrundungstiefe t wird nun an die Spanfläche 21 ein Krümmungskreis oder innerer Tangentialkreis angelegt, der die Spanfläche 21 im Punkt T1 berührt, der radial beim Radius r0 - t liegt, und die Freifläche 22 tangential im Punkt T2 berührt und den Krümmungsmittelpunkt M aufweist. Die entsprechende diesem Krümmungskreis verrundete von dem Punkt T1 an der Spanfläche 21 zum Punkt T2 an der Freifläche verlaufende Schneidkante oder Schneidenverrundung als gekrümmte Schneidenprofilkurve ist mit 20 bezeichnet.

Der Krümmungsradius R der verrundeten Schneidkante oder Schneidenverrundung 20 ist bei vorgegebenem Spanwinkel γ1 und vorgegebenem Freiwinkel γ2 der Schneide 2 aus der folgenden Gleichung als Funktion der Verrundungstiefe t herleitbar:

$$R = t \cdot \tan\left(0,5 \cdot (90° - γ1 - γ2)\right) / \cos γ1 \qquad (1)$$

Nun wird die Verrundungstiefe t zwischen einem minimalen Wert tmin und einem maximalen Wert tmax variierend eingestellt. Daraus ergibt sich ein Wertebereich für den Krümmungsradius R der verrundeten Schneidkante oder Schneidenverrundung 20 zwischen Rmin = R (tmin) und Rmax = R(tmax). Der maximale Krümmungskreis mit dem maximalen Krümmungsradius Rmax und dem Krümmungsmittelpunkt Mmax und den Berührpunkten T1max an der Spanfläche 21 bei der Tiefe r0 - tmax und T2max an der Freifläche 22 einerseits und der minimale Krümmungskreis mit dem minimalen Krümmungsradius Rmin und dem Krümmungsmittelpunkt Mmin und den Berührpunkten T1min an der Spanfläche 21 bei r0 - tmin und T2min an der Freifläche 22 sind gestrichelt eingezeichnet.

Es ergibt sich also ein Wertebereich von Rmin bis Rmax für den an der verrundeten Schneidkante oder Schneidenverrundung 20 einstellbaren Krümmungsradius R.

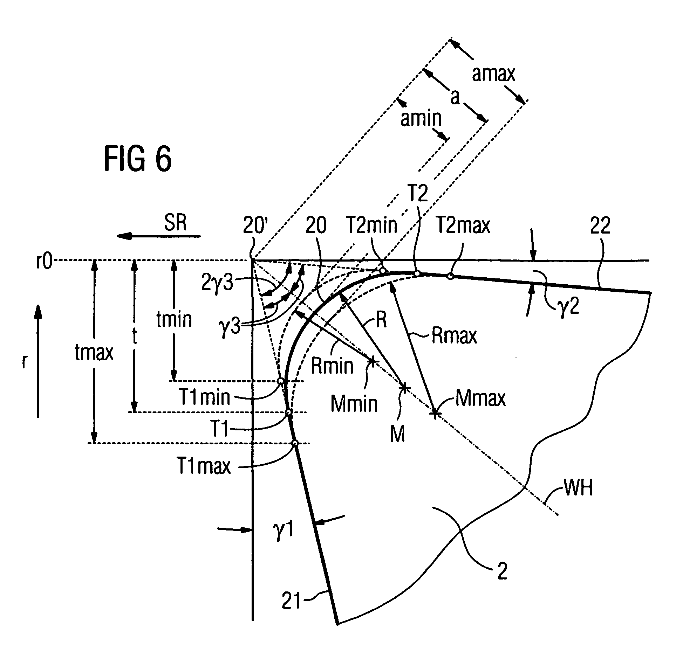

In FIG 6 ist nun die erfindungsgemäß verrundete Schneidkante gemäß FIG 5 zusätzlich mit einer definierten Reduktionstiefe oder Abtragtiefe a gegenüber der idealen Keilform oder unverrundeten Schneidkante dargestellt.

Eine Winkelhalbierende der idealen Keilform oder unverrundete Schneidkante ist mit WH bezeichnet und verläuft durch deren Endpunkt 20', der auf der linienförmigen Kante liegt, beim Außenradius r0. Der Winkel zwischen der Winkelhalbierenden WH und dem geradlinigen Profilabschnitt der Spanfläche 21 oder der Spanfläche des ideal keilförmigen Schneidenprofils einerseits und der Winkel zwischen der Winkelhalbierenden WH und dem geradlinigen Profilabschnitt der Freifläche 22 oder der Freifläche des ideal keilförmigen Schneidenprofils andererseits sind gleich zueinander und jeweils mit γ3 bezeichnet. Der Keilwinkel des ideal keilförmigen Schneidenprofils bei dem Endpunkt 20' ist entsprechend 2·γ3 und entspricht dem Winkel zwischen dem geradlinigen Profilabschnitt der Spanfläche 21 oder der Spanfläche des ideal keilförmigen Schneidenprofils einerseits und dem geradlinigen Profilabschnitt der Freifläche 22 oder der Freifläche des ideal keilförmigen Schneidenprofils andererseits.

Die Reduktionstiefe oder Abtragtiefe a der verrundeten Schneides ist der entlang der Winkelhalbierenden WH der idealen Keilform gemessene Abstand der verrundeten Schneidenprofilkurve 20 von dem Endpunkt 20' der idealen Keilform.

Die verrundete Schneide bzw. deren Schneidenprofilkurve 20 mit dem Krümmungsmittelpunkt M und dem Krümmungsradius R hat die Reduktionstiefe a, die verrundete, gestrichelt eingezeichnete Schneide mit den minimalen Krümmungsradius Rmin und dem Krümmungsmittelpunkt Mmin hat die minimale Reduktionstiefe amin und die verrundete, gestrichelt eingezeichnete Schneide mit dem maximalen Krümmungsradius Rmax und dem Krümmungsmittelpunkt Mmax hat die maximale Reduktionstiefe amax. Es gilt also amin ≤ a ≤ amax. Die Krümmungsmittelpunkte Mmin, M und Mmax liegen alle auf der Winkelhalbierenden WH.

Zwischen dem Krümmungsradius R und der Reduktionstiefe a sowie dem halben Keilwinkel γ3 der idealen Keilform kann für den dargestellten Fall einer kreislinienförmigen Schneide 20 folgende Beziehung hergestellt werden:

$$R = a \cdot (\tan^2 γ3 + \tan γ3 \; / \cos γ3) \qquad (2)$$

Bei der Kopfschneide 11 ist

$$γ3 = (90° - γ1 - γ2) / 2$$

mit dem Spanwinkel γ1 und dem Freiwinkel γ2.

Bei den hinteren Flankenschneiden 13 der Gewindeschneidzähne 10 ist

$$\gamma3 = (90° + \varepsilon + \delta) / 2$$

und bei den vorderen Flankenschneiden 12 der Gewindeschneidzähne 10

$$\gamma3 = (90° - \varepsilon - \delta) / 2$$

mit dem Drallwinkel e und dem Steigungswinkel δ.

Die Schneidenprofilkurve 20 der Schneide 2 ergibt gemäß FIG 5 oder FIG 6 ein Kreisliniensegment, was zur Erläuterung der Erfindung am Besten geeignet ist. Man kann aber anstelle von kreisförmigen Verbindungslinien zwischen den Berührpunkten T1 und T2 in Abwandlungen auch andere Kurvenformen, z. B. Ellipsen, Hyperbeln, Parabeln, Trompetenkurven oder aus verschiedenen Kurvenabschnitten zusammengesetzte Kurven, etc. mit variablem Krümmungsradius in die Schneide 2 zwischen die Spanfläche 21 und die Freifläche 22 in symmetrischer oder asymmetrischer Form zur Winkelhalbierenden WH legen. Der Übergang zwischen der Schneidenprofilkurve 20 und der Spanfläche 21 sowie Freifläche 22 muss auch nicht tangential oder glatt sein, sondern kann auch unter einer Kante oder Ecke oder ähnlich erfolgen.

Bei einer anderen Funktion oder Geometrie der Schneidenprofilkurve 20 als der vorgenannten Kreisform ergibt sich ein anderer Zusammenhang zwischen dem dann nicht mehr konstanten Krümmungsradius R und Reduktionstiefe a sowie halbem Keilwinkel γ3, der allgemein durch folgende allgemeinere Beziehung beschrieben werden kann :

$$R = R (a, \gamma3) \qquad\qquad (3)$$

In den meisten Fällen kann jedoch eine einfachere Beziehung

$$R = a \cdot f (\gamma3) \qquad\qquad (4)$$

verwendet werden, bei der also der Krümmungsradius R dem Produkt aus der Reduktionstiefe a mit einer allgemeinen Funktion f (γ3) des (halben) Keilwinkels γ3 entspricht.

Die Schneidenverrundung 20 und deren Krümmung, insbesondere der Wertebereich für den Krümmungsradius R und dessen Grenzen Rmin und Rmax, und/oder die Reduktionstiefe a, insbesondere der Wertebereich für die Reduktionstiefe a zwischen amin und amax, sind bzw. ist als Funktion von oder abhängig insbesondere von den folgenden Parametern:

- Anschnittform

- Anschnittdurchmesser

- Gewindedurchmesser

- Gewindesteigungswinkel δ oder der Gewindesteigung P

- Spannutenzahl

- Seitenspanwinkel oder Drallwinkel e

- Spanwinkel

- Freiwinkel

- zu bearbeitender Werkstoff

- Werkstoff der Gewindeschneidzähne

gewählt.

Bevorzugt werden der Krümmungsradius R und die Reduktionstiefe a der Schneidenprofilkurve 20 abhängig zumindest von den folgenden drei Parametern

- Anstieg oder Zunahme des maximalen radialen Abstandes der Außenschneiden oder Kopfschneiden der Gewindeschneidzähne (oder: der gemäß dem Gewindeprofil geformten Gewindeschneiden) über den Anschnittbereich entsprechend dem Verlauf der radialen Abstandsfunktion r(z) im Anschnittsbereich, im dargestellten Ausführungsbeispiel also von r (0) bei z = 0 bis r0 = r(z0) bei z = z0 mit der Differenz Δr= r0 - r1 oder gleichbedeutend der Anschnittlänge La bei vorgegebenem Anschnitt- oder Anschnittkegelwinkel
- Anzahl Z der Gewindeschneidzähne im Anschnittbereich und
- Gewindesteigung P oder Gewindesteigungswinkel 8

gewählt.

Es wird nun gemäß der Erfindung folgender empirisch gefundener (linearer) Zusammenhang für die Reduktionstiefe a in Abhängigkeit von der Gewindesteigung P und Zahl Z der Anschnittzähne herangezogen:

$$a = C \cdot P / Z \qquad (5)$$

mit der reellen Zahl oder Konstanten C, die erfindungsgemäß aus dem folgenden Intervall gewählt ist

$$0{,}0075 \leq C \leq 0{,}7383 \qquad (6)$$

vorzugsweise aus dem Intervall

$$0{,}0664 \leq C \leq 0{,}3692 \qquad (7).$$

In der Konstanten C gemäß (4) und (5) oder (4) und (6) ist im vorliegenden Ausführungsbeispiel auch die Abhängigkeit der Reduktionstiefe a vom radialen Anstieg Δr im Anschnittbereich 51 berücksichtigt, denn Δr ist hier proportional zur Gewindesteigung P.

Bei einer komplizierteren radialen Abstandsfunktion r(z) kann sich noch eine weitere Abhängigkeit der Reduktionstiefe a vom Radius r(z) ergeben.

Der Krümmungsradius R ergibt sich aus der Reduktionstiefe a durch Einsetzen von (5) zusammen mit (6) oder (7) in (2), (3) oder (4).

Die Gewindeschneidzähne des Gewindebohrers können auch mit Verrundungen im Außenbereich zwischen Gewindekopfschneiden und Flankenschneiden und auch am Zahnrücken (Rückseite der Nut) versehen sein, beispielsweise für Rückwärtsschnitt nach Drehrichtungsumkehr.

Der Gewindeschneidbereich, insbesondere 50, kann einstückig mit dem Schaft 53 ausgebildet sein, z.B. in VHM-Ausführung oder auch als gesondertes Teil mit dem Schaft 53 verbunden werden (VHM oder KHM). Ferner können auch vorgefertigte Teile mit Gewindeschneidzähnen, z.B. 10 in Form von Leisten oder ähnlich an den Schaft 53 angebracht, insbesondere angelötet, geklemmt oder angeschraubt werden.

Der Gewindebohrer, insbesondere 5, kann ferner mit einer an sich bekannten Hartschicht oder Verschleißschutzschicht oder reibungsvermindernden Schicht beschichtet werden, z.B. mit TiN; TiCN, TiALN, AlCrN oder WC/C usw.

Ferner können der Gewindeschneidbereich, insbesondere 50, oder zumindest die Schneiden oder Gewindeschneidzähne 11 auch aus einem anderen Hartstoff gebildet sein, beispielsweise polykristallinem Diamant (PKD), kubischem Bornitrid (CBN), Korund, einem Metallborid, insbesondere Magnesiumborid, oder einem Metallboridcarbid, insbesondere Magnesiumboridcarbid, oder auch aus einem Nichthartstoff wie z.B. Hochleistungsschnellarbeitsstahl HSS.

Beim Gewindebohrer gemäß der Erfindung genügt eine Schafttoleranz h6, es kann aber auch z.B. h9 verwendet werden. Ferner kann eine interne Kühl- und/oder Schmiermittelzufuhr über Kanäle im Gewindebohrer vorgesehen sein, insbesondere mit radialem und/oder axialem Austritt.

**Bezugszeichenliste**

| | |
|---|---|
| 2 | Schneide |
| 5 | Gewindebohrer |
| 10 | Gewindeschneidzahn |
| 11 | Kopfschneide |
| 12, 12 | Flankenschneide |
| 20 | Schneidenverrundung |
| 20' | unverrundete Schneidkante |
| 21 | Spanfläche |
| 22 | Freifläche |
| 45 | Spannut |
| 50 | Gewindeschneidbereich |
| 51 | Anschnittbereich |
| 52 | Führungsbereich |
| 53 | Schaft |
| 54 | Vierkant |
| 55 | Ende |
| | |
| A | Drehachse |
| r | radialer Abstand |
| r0 | Außenradius |
| SR | Schnittrichtung |
| P | Gewindesteigung |
| La | Anschnittlänge |
| E1, E2, E3 | Projektionsebene |
| P1, P2, P3 | Messort |
| t, tmin, tmax | Verrundungstiefe |
| M, Mmin, Mmax | Krümmungsmittelpunkt |
| R, Rmin, Rmax | Krümmungsradius |
| T1, T2 | Berührpunkt |
| T1min, T2min | Berührpunkt |
| T1max, T2max | Berührpunkt |
| $\varepsilon$ | Seitenspanwinkel |
| $\gamma 1$ | Spanwinkel |
| $\gamma 2$ | Freiwinkel |
| $\gamma 3$ | halber Keilwinkel |
| a, amin, amax | Reduktionstiefe |
| W | Winkelhalbierende |

**Patentansprüche**

1. Gewindebohrer (5),

a) der um eine Drehachse (A) drehbar ist und
b) einer Anzahl von Gewindeschneidzähnen (10) aufweist, die jeweils eine radial außenliegende Kopfschneide (11) aufweisen und in einer die Drehachse (A) spiralförmig oder schraubenförmig umlaufenden Anordnung mit einer vorgegebenen Gewindesteigung (P) zueinander versetzt angeordnet sind,
c) wobei in einem sich an ein Ende des Gewindebohrers (5) axial zur Drehachse (A) anschließenden Anschnittbereich (51) der maximale radiale Abstand der Kopfschneiden (11) der Gewindeschneidzähne (10) von der Drehachse (A) mit steigendem axialem Abstand der Kopfschneiden (11) von einem Ende des Gewindebohrers (5) gemäß einer vorgegebenen radialen Abstandsfunktion zunimmt,
d) wobei radial als senkrecht zur Drehachse (A) und axial als entlang der oder parallel zur Drehachse (A) definiert sind, **dadurch gekennzeichnet, dass**

e) wenigstens ein Teil der Gewindeschneldzähne (10) im Anschnittbereich (51) wenigstens im Bereich der Kopfschneiden (11) jeweils eine definierte Schneidenverrundung (20) zwischen Spanfläche (21) und Freifläche (22) aufweisen, wobei die Krümmungen der Schneidenverrundungen (20) und/oder Reduktionstiefen der Schneidverrundungen (20) im Vergleich zur idealen Keilform (20') oder zur unverrundeten Schneidkante jeweils abhängig

e1) von der Anzahl der Gewindeschneidzähne (10) im Anschnittbereich (51) und

e2) von der Gewindesteigung (P)

gewählt sind,

f) wobei die Krümmungsradien der Schneidenverrundungen (20) wenigstens eines Teils der Gewindeschneidzähne (10) im Anschnittbereich (51) wenigstens im Bereich deren Kopfschneiden (11) gemäß der Beziehung

$$R = f\,(\gamma 3) \cdot\ C \cdot P\ /\ Z$$

und die Reduktionstiefen der Schneidenverrundungen (20) wenigstens eines Teils der Gewindeschneidzähne (10) im Anschnittbereich (51) wenigstens im Bereich deren Kopfschneiden (11) gemäß der Beziehung

$$a = C \cdot P\ /\ Z$$

gewählt sind,

wobei R der Krümmungsradius, $2\gamma 3$ der Keilwinkel, $f\,(\gamma 3)$ eine Funktion des Keilwinkels $2\gamma 3$, P die Gewindesteigung und Z die Anzahl der Gewindeschneidzähne im Anschnittbereich sind und

C eine reelle Zahl ist mit

$$0{,}0075 \leq C \leq 0{,}7383.$$

2. Gewindebohrer (5) nach Anspruch 1, bei dem die Krümmungen der Schneidenverrundungen (20) und/oder Reduktionstiefen der Schneidverrundungen (20) im Vergleich zur idealen Keilform (20') oder zur unverrundeten Schneidkante jeweils abhängig von der Zunahme des maximalen radialen Abstandes der Kopfschneiden (11) der Gewindeschneidzähne (10) im Anschnittder der bereich (51) oder von der radialen Abstandsfunktion der Gewindeschneidzähne (10) im Anschnittsbereich (51) gewählt sind.

3. Gewindebohrer (5) nach Anspruch 1 oder Anspruch 2, bei dem die Krümmungsradien der Schneidenverrundungen (20) und/oder die Reduktionstiefen der Schneidverrundungen (20) der Gewindeschneidzähne (10) im Anschnittbereich (51) jeweils zumindest im Mittel kleiner sind,

- wenn, bei gleicher Gewindesteigung (P) und/oder bei gleicher radialer Abstandsfunktion, die Anzahl der Gewindeschneidzähne (10) im Anschnittbereich (51) größer ist,

oder

- wenn, bei gleicher Anzahl der Gewindeschneidzähne (10) im Anschnittbereich (51) und/oder bei gleicher Gewindesteigung (P), die Zunahme des maximalen radialen Abstandes über den gesamten Anschnittbereich (51) gemäß der radialen Abstandsfunktion kleiner ist,

oder

- wenn, bei gleicher radialer Abstandsfunktion und/oder bei gleicher Anzahl der Gewindeschneidzähne (10) im Anschnittbereich (51), die Gewindesteigung (P) kleiner ist.

4. Gewindebohrer (5) nach einem der vorhergehenden Ansprüche, bei dem die radiale Abstandsfunktion der Gewindeschneiden im Anschnittsbereich (51) monoton, vorzugsweise streng monoton, wachsend ist und/oder bei dem die radiale Abstandsfunktion für den maximalen radialen Abstand der Kopfschneiden (11) eine lineare Funktion oder eine Stufen- oder Treppenfunktion des axialen Abstandes vom Ende des Gewindebohrers (5) ist, und/oder bei dem die radiale Abstandsfunktion für den maximalen radialen Abstand der Kopfschneiden (11) aus der eine rationale oder gebrochen rationale Funktion n-ter Ordnung, insbesondere ein Polynom n-ter Ordnung, eine Wurzel- oder Potenzfunktion, eine Exponentialfunktion oder eine logarithmische Funktion, eine Spiralfunktion, insbesondere eine logarithmische oder archimedische Spirale, oder eine, insbesondere durch Lagrangesche Interpolationspolynome oder Spline-Funktionen, interpolierte Funktion umfassenden Gruppe von Funktionen ausgewählt ist.

5. Gewindebohrer (5) nach einem der vorhergehenden Ansprüche mit einem axial auf den Anschnittbereich (51) folgenden Führungsbereich (52), in den sich die Anordnung der Gewindeschneidzähne (10) fortsetzt und in dem der maximale radiale Abstand der Kopfschneiden (11) der Gewindeschneidzähne (10) mit steigendem axialem Abstand von einem Ende des Gewindebohrers (5) nicht mehr zunimmt, insbesondere gleich bleibt und anschließend wieder leicht abnimmt, wobei vorzugsweise wenigstens ein Teil der Gewindeschneidzähne (10) im Führungsbereich (52) wenigstens im Bereich der Kopfschneiden (11) jeweils eine definierte Schneidenverrundung (20) aufweisen, wobei vorzugsweise die Krümmungen der Schneidenverrundungen (20) und/oder die Reduktionstiefen der Schneidverrundungen (20) jeweils abhängig von der Gewindesteigung (P) gewählt sind.

6. Gewindebohrer (5) nach einem der vorhergehenden Ansprüche, bei dem Krümmungsradien der Schneidenverrundungen (20) innerhalb eines Bereichs von 2 $\mu$m bis 200 $\mu$m, vorzugsweise innerhalb eines Bereichs von 18 $\mu$m bis 100 $\mu$m oder von 5 $\mu$m bis 60 $\mu$m, variierbar sind oder liegen oder bei dem die Schneidenverrundungen (20) der Gewindeschneidzähne (10) mit gekrümmten Schneidenprofilkurven zwischen Spanfläche (21) und Freifläche (22) gebildet sind.

7. Gewindebohrer (5) nach einem der vorhergehenden Ansprüche, bei dem wenigstens eine Schneidenverrundung (20) oder wenigstens eine Schneidenprofilkurve wenigstens abschnittsweise im Wesentlichen entlang einem Krümmungskreis oder kreisbogenförmig verläuft oder eine(n) wenigstens abschnittsweise im Wesentlichen konstante(n) Krümmung oder Krümmungsradius aufweist,
und/oder
bei dem wenigstens eine Schneidenverrundung (20) oder wenigstens eine Schneidenprofilkurve wenigstens abschnittsweise im Wesentlichen einen nicht- kreisbogenförmigen Verlauf hat, insbesondere gemäß einer rationalen oder gebrochen rationalen Funktion n-ter Ordnung, insbesondere eines Polynoms n-ter Ordnung, einer Wurzel- oder Potenzfunktion, einer Exponentialfunktion oder logarithmischen Funktion, einer Spiralfunktion, insbesondere einer logarithmischen oder archimedischen Spirale, oder einer, insbesondere durch Lagrangesche Interpolationspolynome oder Spline-Funktionen, interpolierten Funktion,
oder bei dem wenigstens eine Schneidenverrundung (20) oder wenigstens eine Schneidenprofilkurve eine(n) wenigstens abschnittsweise im Wesentlichen veränderliche(n) oder nicht-konstante(n) Krümmung oder Krümmungsradius (R) aufweist.

8. Gewindebohrer (5) nach Anspruch 7, bei dem die Krümmung wenigstens eine Schneidenverrundung (20) oder wenigstens eine Schneidenprofilkurve von der Spanfläche (21) zur Freifläche (22) hin zunimmt oder abnimmt,
oder
bei dem die Krümmung wenigstens eine Schneidenverrundung (20) oder wenigstens eine Schneidenprofilkurve von der Spanfläche (21) zur Freifläche (22) hin zunimmt bis auf ein Maximum und dann wieder abnimmt,
oder
bei dem die Krümmung wenigstens eine Schneidenverrundung (20) oder wenigstens eine Schneidenprofilkurve von der Spanfläche (21) zur Freifläche (22) hin abnimmt bis auf ein Minimum und dann wieder zunimmt oder bei dem in einem zentralen Bereich der Kopfschneiden (11) vorgegebene Krümmung der Schneidenverrundung (20) vorgesehen ist und in Übergangsbereichen zu den Flankenbereichen oder Schneidecken der Gewindeschneidzähne (10) eine andere Krümmung oder auch eine Kantenform praktisch ohne Krümmung vorgesehen ist.

9. Gewindebohrer (5) nach einem der vorhergehenden Ansprüche, bei dem zwischen die Schneidenverrundung (20) die Spanfläche (21) und/oder die Freifläche (22) der entsprechenden Schneide tangential oder stetig differenzierbar oder glatt übergeht,
und/oder
bei dem die Krümmung oder wenigstens ein Krümmungsradius der Schneidenverrundung (20) in einem vorgegebenen Werteintervall liegt, das abhängig von einer Verrundungstiefe (t) bestimmt ist.

10. Gewindebohrer (5) nach einem der vorhergehenden Ansprüche, bei dem die Krümmungen der Schneidenverrundungen (20) oder Schneidenprofilkurven und/oder die Reduktionstiefen der Schneidverrundungen (20) abhängig vom Gewindedurchmesser sind und/oder abhängig vom Spanwinkel der Spanfläche (21) und/oder vom Freiwinkel der Freifläche (22) und/oder vom Keilwinkel der idealen Keilform und/oder vom Seitenspanwinkel der Schneiden sind und/oder abhängig vom Werkstoff, in dem das Gewinde zu erzeugen ist, und/oder vom Werkstoff der Gewindeschneidzähne (10) und/oder dessen Zustand wie Gefüge und/oder Härte sind.

**11.** Gewindebohrer (5) nach einem der vorhergehenden Ansprüche mit wenigstens zwei Spannuten (45), die parallel oder axial zur Drehachse verlaufen oder die Drehachse (A) mit einem variablen oder konstanten Drallwinkel umlaufen, wobei an jeder Spannut (45) jeweils wenigstens ein und vorzugsweise mehrere axial versetzte Gewindeschneidzähne (10) angeordnet sind, wobei die Krümmungen der Schneidenverrundungen (20) oder Schneidenprofilkurven und/oder die Reduktionstiefen der Schneidverrundungen (20) jeweils abhängig von der Zahl der Spannuten (45) und/oder von dem Drallwinkel der Spannuten (45) gewählt sind.

**12.** Gewindebohrer (5) nach einem der vorhergehenden Ansprüche, bei dem für die reelle Zahl C gilt

$$0{,}0664 \leq C \leq 0{,}3692.$$

**13.** Gewindebohrer (5) nach einem der vorhergehenden Ansprüche, bei dem zumindest die Gewindeschneidzähne (10) wenigstens an den Kopfschneiden (11) aus einem Hartmetall oder Metallcarbiden oder aus einem anderen, insbesondere spröden, Hartstoff gebildet sind, insbesondere polykristallinem Diamant (PKD), kubischem Bornitrid (CBN), Korund, einem Metallborid, insbesondere einem Magnesiumborid, oder einem Metallboridcarbid, insbesondere einem Magnesiumboridcarbid.

**14.** Satz von Gewindebohrern (5) nach einem der vorhergehenden Ansprüche, bei dem die Gewindebohrer (5) sich in der Anzahl der Gewindeschneidzähne (10) im Anschnittbereich (51) und/oder in der Zunahme des maximalen radialen Abstandes der Kopfschneiden (11) der Gewindeschneidzähne (10) im Anshnittbereih (51) oder von der radialen Abstandsfunktion der Gewindeschneidzähne (10) im Anschnittsbereich (51) und/oder in der Gewindesteigung (P) unterscheiden und sich bei den unterschiedlichen Gewindebohrern (5) abhängig von dem oder den genannten Parametern, die Krümmungen der Schneidkantenverrundungern (20) wenigstens eines Teil der Gewindeschneidzähne (10) im Anschnittbereich (51) wenigstens im Bereich der Kopfschneiden (11) unterscheiden.

**15.** Verfahren zum Herstellen von Gewindebohrern (5), die um eine Drehachse (A) drehbar sind, bei dem

a) für jeden Gewindebohrer (5) eine zugehörige Anzahl von Gewindeschneidzähnen (10) erzeugt wird, die jeweils eine radial außenliegende Kopfschneide (11) aufweisen und in einer die Drehachse (A) spiralförmig oder schraubenförmig umlaufenden Anordnung mit einer vorgegebenen Gewindesteigung (P) zueinander versetzt angeordnet sind, erzeugt wird

c) wobei in einem sich an ein Ende des Gewindebohrers (5) axial zur Drehachse (A) anschließenden Anschnittbereich (51) der maximale radiale Abstand der Kopfschneiden (11) der Gewindeschneidzähne (10) von der Drehachse (A) mit steigendem axialem Abstand der Kopfschneiden (11) von einem Ende des Gewindebohrers (5) gemäß einer vorgegebenen radialen Abstandsfunktion zunimmt,

d) wobei radial als senkrecht zur Drehachse (A) und axial als entlang der oder parallel zur Drehachse (A) definiert sind, **dadurch gekennzeichnet , dass**

e) wenigstens ein Teil der Gewindeschneidzähne (10) im Anschnittbereich (51) wenigstens im Bereich der Kopfschneiden (11) mit jeweils einer Schneidkantenverrundung (20) mit definierter Krümmung versehen oder erzeugt werden, wobei

die Krümmungen der Schneidkantenverrundungen (20) und/oder die Reduktionstiefen der verrundeten Schneidkanten im Vergleich zur idealen Keilform oder unverrundeten Schneidkante jeweils

e1) von der Anzahl der Gewindeschneidzähne (11) im Anschnittbereich (51) und

e2) von der Gewindesteigung (P) und

e3) vorzugsweise auch von der Zunahme des maximalen radialen Abstandes der Kopfschneiden (11) der Gewindeschneidzähne (10) im Anschnittbereich, (51) oder von der radialen Abstandsfunktion der Gewindeschneidzähne (10) im Anschnittsbereich (51) des jeweiligen Gewindebohrers (5) abhängig gewählt oder eingestellt werden,

f) wobei die Krümmungsradien der Schneidenverrundungen (20) wenigstens eines Teils der Gewindeschneidzähne (10) im Anschnittbereich (51) wenigstens im Bereich deren Kopfschneiden (11) gemäß der Beziehung

$$R = f\,(\gamma 3) \cdot\ C \cdot P \, / \, Z$$

und die Reduktionstiefen der Schneidenverrundungen (20) wenigstens eines Teils der Gewindeschneidzähne (10) im Anschnittbereich (51) wenigstens im Bereich deren Kopfschneiden (11) gemäß der Beziehung

$$\mathfrak{a} = C \cdot P \ / \ Z$$

gewählt sind,
wobei R der Krümmungsradius, 2γ3 der Keilwinkel, f (γ3) eine Funktion des Keilwinkels 2γ3, P die Gewindesteigung (P) und Z die Anzahl der Gewindeschneidzähne (10) im Anschnittbereich (51) sind und C eine reelle Zahl ist mit

$$0{,}0075 \le C \le 0{,}7383.$$

g) wobei vorzugsweise die Gewindeschneidzähne (10) mit noch unverrundeten Schneidkanten durch Schleifen erzeugt werden und/oder wobei vorzugsweise zum Verrunden der Schneidkanten der Gewindeschneidzähne (10) ein mechanisches Feinabtragsverfahren, insbesondere ein Strahlschleif- oder Strahlspanverfahren mit abrasivem Material, ein Bürstverfahren oder ein Hochdruckwasserstrahlverfahren, eingesetzt wird.

**Claims**

1.  Screw tap (5),

    a) which is rotatable about a rotation axis (A) and
    b) has a number of thread-cutting teeth (10), which each have a top cutting edge (11) lying radially outwardly, said teeth being arranged mutually offset, encompassing the rotation axis (A) in a spiral or helical arrangement with a pre-determined thread pitch (P),
    c) wherein in a lead region (51) which adjoins one end of the screw tap (5) axially in relation to the rotation axis (A), the maximum radial distance of the top cutting edges (11) of the thread-cutting teeth (10) from the rotation axis (A) increases with increasing axial distance of the top cutting edges (11) from one end of the screw tap (5) according to a pre-determined radial distance function,
    d) wherein radial is defined as perpendicular to the rotation axis (A) and axial as along or parallel to the rotation axis (A), **characterised in that**
    e) at least some of the thread-cutting teeth (10) in the lead region (51), at least in the region of the top cutting edges (11), have a defined cutter rounding (20) between tool face (21) and tool flank (22), wherein the curvature of the cutter roundings (20) and/or the reduction depths of the cutter roundings (20) are selected, as compared with the ideal wedge shape (20') or with the unrounded cutting edge, respectively depending on

       e1) the number of thread-cutting teeth (10) in the lead region (51) and
       e2) the thread pitch (P),

    f) wherein the radii of curvature of the cutter roundings (20) of at least some of the thread-cutting teeth (10) in the lead region (51) are selected, at least in the region of the top cutting edges (11) thereof, according to the relation

$$R = f \ (\gamma 3) \cdot C \cdot P \ / \ Z$$

    and the reduction depths of the cutter roundings (20) of at least some of the thread-cutting teeth (10) in the lead region (51) are selected, at least in the region of the top cutting edges (11) thereof, according to the relation

$$\mathfrak{a} = C \cdot P \ / \ Z$$

    where R is the radius of curvature, 2γ3 is the wedge angle, f (γ3) is a function of the wedge angle 2γ3, P is the thread pitch and Z is the number of thread-cutting teeth in the lead region, and C is a real number such that

$$0.0075 \leq C \leq 0.7383.$$

2.  Screw tap (5) according to claim 1, wherein the curvatures of the cutter roundings (20) and/or the reduction depths of the cutter roundings (20) are selected, in comparison with the ideal wedge form (20') or the unrounded cutting edge, respectively depending on the increase in the maximum radial distance of the top cutting edges (11) of the thread-cutting teeth (10) in the lead region (51) or on the radial distance function of the thread-cutting teeth (10) in the lead region (51).

3.  Screw tap (5) according to claim 1 or claim 2, wherein the radii of curvature of the cutter roundings (20) and/or the reduction depths of the cutter roundings (20) of the thread-cutting teeth (10) in the lead region (51) are respectively, at least on average, smaller,

    - if, given the same thread pitch and/or the same radial distance function, the number of thread-cutting teeth (10) in the lead region (51) is greater,
    or
    - if, given the same number of thread-cutting teeth (10) in the lead region (51) and/ or given the same thread pitch (P), the increase in the maximum radial distance over the whole of the lead region (51) according to the radial distance function is smaller,
    or
    - if, given the same radial distance function and/or the same number of thread-cutting teeth (10) in the lead region (51), the thread pitch (P) is smaller.

4.  Screw tap (5) according to one of the preceding claims, wherein the radial distance function of the thread cutters in the lead region (51) is monotonically, preferably strictly monotonically, growing and/or wherein the radial distance function for the maximum radial distance of the top cutting edges (11) is a linear function or a stepped or staircase function of the axial distance from the end of the screw tap (5),
    and/or
    wherein the radial distance function for the maximum radial distance of the top cutting edges (11) is selected from the group of functions comprising a rational function or a fractionally rational function of n-th order, in particular a polynomial of n-th order, a root or power function, an exponential function or a logarithmic function, a spiral function, in particular a logarithmic or Archimedean spiral, or a function interpolated, in particular, by Lagrangean interpolation polynomials or spline functions.

5.  Screw tap (5) according to one of the preceding claims, comprising a guide region (52) which follows the lead region (51) axially and into which the arrangement of thread-cutting teeth (10) extends and in which the maximum radial distance of the top cutting edges (11) of the thread-cutting teeth (10) no longer increases with increasing axial distance from one end of the screw tap (5), in particular remains the same and then slightly decreases again, wherein preferably at least some of the thread-cutting teeth (10) in the guide region (52), at least in the region of the top cutting edges (11), each have a defined cutter rounding (20), wherein, preferably, the curvatures of the cutter roundings (20) and/or the reduction depths of the cutter roundings (20) are each selected depending on the thread pitch (P).

6.  Screw tap (5) according to one of the preceding claims, wherein the radii of curvature of the cutter roundings (20) lie or are variable within a range from 2 $\mu$m to 200 $\mu$m, preferably within a range from 18$\mu$m to 100 $\mu$m or from 5 $\mu$m to 60 $\mu$m or wherein the cutter roundings (20) of the thread-cutting teeth (10) are formed with arched cutting profile curves between the tool face (21) and the tool flank (22).

7.  Screw tap (5) according to one of the preceding claims, wherein at least one cutter rounding (20) or at least one cutter profile curve extends, at least in sections, along a circle of curvature or in a circular arc or has, at least in sections, an essentially constant curvature or radius of curvature,
    and/or
    wherein at least one cutter rounding (20) or at least one cutter profile curve has, at least in sections, essentially a non-circular arc-shaped course, in particular according to a rational or fractionally rational function of the n-th order, in particular a polynomial of the n-th order, a root or power function, an exponential function or logarithmic function, a spiral function, in particular a logarithmic or Archimedean spiral, or a function interpolated, in particular, by Lagrangean interpolation polynomials or spline functions,

or wherein at least one cutter rounding (20) or at least one cutter profile curve has a curvature or radius of curvature (R) which, at least in sections, is substantially variable or non-constant.

8. Screw tap (5) according to claim 7, wherein the curvature of at least one cutter rounding (20) or of at least one cutter profile curve increases or decreases from the tool face (21) to the tool flank (22)

or

wherein the curvature of at least one cutter rounding (20) or of at least one cutter profile curve increases from the tool face (21) to the tool flank (22) up to a maximum and then decreases again,

or

wherein the curvature of at least one cutter rounding (20) or of at least one cutter profile curve decreases from the tool face (21) to the tool flank (22) down to a minimum and then increases again or wherein, in a central region of the top cutting edges (11), the pre-defined curvature of the cutter rounding (20) is provided and, in transition regions to the flank regions or the cutting corners of the thread-cutting teeth (10), another curvature, or even an edge shape practically without curvature is provided.

9. Screw tap (5) according to one of the preceding claims, wherein the cutter rounding (20) merges into the tool face (21) and/or the tool flank (22) of the respective cutter in a tangential, or a continuously differentiable, or a smooth, manner,

and/or

wherein the curvature or at least a radius of curvature of the cutter rounding (20) lies in a pre-determined value range which is determined depending on a rounding depth (t).

10. Screw tap (5) according to one of the preceding claims, wherein the curvatures of the cutter roundings (20) or cutter profile curves and/or the reduction depths of the cutter roundings (20) are depending on the thread diameter and/or on the rake angle of the tool face (21) and/or on the clearance angle of the tool flank (22) and/or on the wedge angle of the ideal wedge shape and/or on the side rake angle of the cutters and/or depending on the material in which the thread is to be produced, and/or on the material of the thread-cutting teeth (10) and/or on the state, such as the structure and/or hardness, thereof.

11. Screw tap (5) according to one of the preceding claims, comprising at least two chip grooves (45) which extend parallel or axially to the rotation axis or encompass the rotation axis (A) with a variable or constant helix angle, wherein arranged at each chip groove (45) is at least one and preferably a plurality of axially offset thread-cutting teeth (10), wherein the curvatures of the cutter roundings (20) or cutter profile curves and/or the reduction depths of the cutter roundings (20) are each selected depending on the number of chip grooves (45) and/or on the helix angle of the chip grooves (45).

12. Screw tap (5) according to one of the preceding claims, wherein for the real number C, the relation $0.0664 \leq C \leq 0.3692$ applies.

13. Screw tap (5) according to one of the preceding claims, wherein at least the thread-cutting teeth (10), at least on the top cutting edges (11) are made of a hard metal or of metal carbides or of another, in particular brittle, hard material, in particular polycrystalline diamond (PCD), cubic boron nitride (CBN), corundum, a metal boride, in particular a magnesium boride, or a metal boride carbide, in particular a magnesium boride carbide.

14. Set of screw taps (5) according to one of the preceding claims, wherein the screw taps (5) differ with regard to the number of thread-cutting teeth (10) in the lead region (51) and/or to the increase in the maximum radial distance of the top cutting edges (11) of the thread-cutting teeth (10) in the lead region (51) or to the radial distance function of the thread-cutting teeth (10) in the lead region (51) and/or to the thread pitch (P) and wherein, in the different screw taps (5), depending on such parameter(s), the curvatures of the cutter roundings (20) of at least some of the thread-cutting teeth (10) in the lead region (51) differ, at least in the region of the top cutting edges (11).

15. Method for producing screw taps (5) which are rotatable about a rotation axis (A), wherein:

a) for each screw tap (5) an associated number of thread-cutting teeth (10) is produced, which each have a top cutting edge (11) lying radially outwardly, said teeth being arranged mutually offset, encompassing the rotation axis (A) in a spiral or helical arrangement with a pre-determined thread pitch (P)

c) wherein in a lead region (51) which adjoins one end of the screw tap (5) axially in relation to the rotation axis (A), the maximum radial distance of the top cutting edges (11) of the thread-cutting teeth (10) from the rotation axis (A) increases with increasing axial distance of the top cutting edges (11) from one end of the screw tap (5) according to a pre-determined radial distance function,

d) wherein radial is defined as perpendicular to the rotation axis (A) and axial as along or parallel to the rotation axis (A), **characterised in that**

e) at least some of the thread-cutting teeth (10) in the lead region (51) are each provided or produced, at least in the region of the top cutting edges (11), with a cutter rounding (20) having a pre-defined curvature, wherein the curvatures of the cutter roundings (20) and/or the reduction depths of the rounded cutting edges are selected or set, as compared with the ideal wedge shape or the unrounded cutting edge, respectively depending on

e1) the number of thread-cutting teeth (11) in the lead region (51) and

e2) the thread pitch (P) and

e3) preferably also on the increase in the maximum radial distance of the top cutting edges (11) of the thread-cutting teeth (10) in the lead region (51), or on the radial distance function of the thread-cutting teeth (10) in the lead region (51) of the respective screw tap (5),

f) wherein the radii of curvature of the cutter roundings (20) of at least some of the thread-cutting teeth (10) in the lead region (51) are selected at least in the region of the top cutting edges (11) thereof according to the relation

$$R = f(\gamma 3) \cdot C \cdot P / Z$$

and the reduction depths of the cutter roundings (20) of at least some of the thread-cutting teeth (10) in the lead region (51) are selected at least in the region of the top cutting edges (11) thereof according to the relation

$$a = C \cdot P / Z$$

where R is the radius of curvature, $2\gamma 3$ is the wedge angle, $f(\gamma)$ is a function of the wedge angle $2\gamma 3$, P is the thread pitch and Z is the number of thread-cutting teeth (10) in the lead region (51), and
C is a real number such that

$$0.0075 \leq C \leq 0.7383$$

g) wherein preferably, the thread-cutting teeth (10) are produced with as yet unrounded cutting edges by grinding and/or wherein preferably, for the rounding of the cutting edges of the thread-cutting teeth (10), a mechanical fine metal-removing method, in particular, a jet-grinding or jet-cutting method with abrasive material, a brushing method or a high-pressure water jet method is used.

**Revendications**

1. Taraud (5),

a) qui peut tourner autour d'un axe de rotation (A) et

b) qui présente une pluralité de dents de filetage (10) qui présentent chacune une tête tranchante (11) située du côté extérieur en position radiale et sont agencées en décalage l'une par rapport à l'autre avec un pas de vis (P) prédéfini dans un agencement entourant l'axe de rotation (A) en forme de spirale ou d'hélice,

c) dans lequel dans une zone de découpe (51) adjacente à une extrémité du taraud (5) en direction axiale par rapport à l'axe de rotation (A), la distance radiale maximale entre les têtes tranchantes (11) des dents de filetage (10) et l'axe de rotation (A) augmente selon une fonction de distance radiale prédéfinie à mesure que la distance axiale entre les têtes tranchantes (11) et une extrémité du taraud (5) augmente,

d) dans lequel la direction radiale est définie comme étant perpendiculaire à l'axe de rotation (A) et la direction axiale est définie comme longeant ou étant parallèle à l'axe de rotation (A),

e) **caractérisé en ce qu'**au moins une partie des dents de filetage (10) présentent chacune dans la zone de découpe (51), au moins dans la zone des têtes tranchantes (11), un arrondi défini de leur tranchant (20) entre la face d'attaque (21) et la face de dépouille (22), étant entendu que les courbures des arrondis du tranchant (20) et/ou les profondeurs de diminution des arrondis du tranchant (20) par rapport à une forme de coin idéale (20') ou à l'arête tranchante non arrondie sont chacune choisies en fonction

e1) du nombre de dents de filetage (10) dans la zone de découpe (51) et

e2) du pas de vis (P),

f) étant entendu que les rayons de courbure des arrondis du tranchant (20) d'au moins une partie des dents de filetage (10) dans la zone de découpe (51), au moins dans la zone de leur tête tranchante (11), sont choisis selon l'équation

$$R = f(\gamma 3) \cdot C \cdot P / Z$$

et que les profondeurs de diminution des arrondis du tranchant (20) d'au moins une partie des dents de filetage (10) dans la zone de découpe (51), au moins dans la zone de leur tête tranchante (11), sont choisies selon l'équation

$$a = C \cdot \frac{P}{Z}$$

étant entendu que R désigne le rayon de courbure, $2\gamma 3$ l'angle du coin, $f(\gamma 3)$ une fonction de l'angle du coin $2\gamma 3$, P le pas de vis et Z le nombre de dents de filetage dans la zone de découpe et que C est un nombre réel conforme à

$$0{,}0075 \leq C \leq 0{,}7383.$$

2. Taraud (5) selon la revendication 1, dans lequel les courbures des arrondis du tranchant (20) et/ou les profondeurs de diminution des arrondis du tranchant (20) par rapport à une forme de coin idéale (20') ou à l'arête tranchante non arrondie sont chacune choisies selon l'augmentation de la distance radiale maximale des têtes tranchantes (11) des dents de filetage (10) dans la zone de découpe (51) ou selon la fonction de distance radiale des dents de filetage (10) dans la zone de découpe (51).

3. Taraud (5) selon la revendication 1 ou la revendication 2, dans lequel les rayons de courbure des arrondis du tranchant (20) et/ou les profondeurs de diminution des arrondis du tranchant (20) des dents de filetage (10) dans la zone de découpe (51) sont à chaque fois plus petits au moins en moyenne :

   - lorsque pour un même pas de vis (P) et/ou pour une même fonction de distance radiale, le nombre de dents de filetage (10) dans la zone de découpe (51) est plus élevé,
   ou
   - lorsque pour un même nombre de dents de filetage (10) dans la zone de découpe (51) et/ou pour un même pas de vis (P), l'augmentation de la distance radiale maximale dans l'ensemble de la zone de découpe (51) selon la fonction de distance radiale est plus faible,
   ou
   - lorsque pour une même fonction de distance radiale et/ou pour un même nombre de dents de filetage (10) dans la zone de découpe (51), le pas de vis (P) est plus petit.

4. Taraud (5) selon l'une des revendications précédentes, dans lequel la fonction de distance radiale des moyens de filetage dans la zone de découpe (51) est croissante de façon monotone, de préférence rigoureusement monotone, et/ou dans lequel la fonction de distance radiale pour la distance radiale maximale des têtes tranchantes (11) est une fonction linéaire ou une fonction discontinue ou échelonnée de la distance axiale depuis l'extrémité du taraud (5), et/ou

   dans lequel la fonction de distance radiale pour la distance radiale maximale des têtes tranchantes (11) est choisie dans un groupe de fonctions comprenant une fonction rationnelle ou rationnelle fractionnaire d'ordre n, en particulier un polynôme d'ordre n, une fonction de racine ou de puissance, une fonction exponentielle ou une fonction logarithmique, une fonction de spirale, en particulier une spirale logarithmique ou d'Archimède ou une fonction interpolée, en particulier au moyen de polynômes d'interpolation de Lagrange ou de fonctions spline.

5. Taraud (5) selon l'une des revendications précédentes comprenant une zone de guidage (52) faisant suite à la section de découpe (51) dans la direction radiale, dans laquelle l'agencement des dents de filetage (10) continue et dans laquelle la distance radiale maximale des têtes tranchantes (11) des dents de filetage (10) n'augmente plus, et en particulier, reste constante et diminue ensuite légèrement, à mesure que la distance axiale à partir d'une extrémité du taraud (5) augmente, étant entendu que de préférence, au moins une partie des dents de filetage (10) dans la zone de guidage (52), au moins dans la zone des têtes tranchantes (11), présentent chacune un arrondi défini de leur tranchant (20), étant entendu que de préférence, les courbures des arrondis du tranchant (20) et/ou les profondeurs de diminution des arrondis du tranchant (20) sont chacune choisies en fonction du pas de vis (P).

6. Taraud (5) selon l'une des revendications précédentes, dans lequel les rayons de courbure des arrondis du tranchant (20) peuvent varier ou se situent à l'intérieur d'une marge de 2 $\mu$m à 200 $\mu$m, de préférence à l'intérieur d'une marge de 18 $\mu$m à 100 $\mu$m ou de 5 $\mu$m à 60 $\mu$m, ou dans lequel les arrondis du tranchant (20) des dents de filetage (10) sont réalisés avec des courbes de profilé de filetage courbées entre la face d'attaque (21) et la face de dépouille (22).

7. Taraud (5) selon l'une des revendications précédentes, dans lequel au moins un arrondi de tranchant (20) ou au moins une courbe de profilé de filetage s'étend sensiblement le long d'un cercle de courbure ou en forme d'arc de cercle, au moins sur une certaine section, ou présente une courbure ou un rayon de courbure sensiblement constant (e) au moins sur une certaine section,
et/ou
dans lequel au moins un arrondi de tranchant (20) ou au moins une courbe de profilé de filetage a sensiblement un tracé qui n'est pas en forme d'arc de cercle, au moins sur une certaine section, en particulier selon une fonction rationnelle ou rationnelle fractionnaire d'ordre n, en particulier un polynôme d'ordre n, une fonction de racine ou de puissance, une fonction exponentielle ou logarithmique, une fonction de spirale, en particulier une spirale logarithmique ou d'Archimède, ou une fonction interpolée, en particulier au moyen de polynômes d'interpolation de Lagrange ou de fonctions spline,
ou dans lequel au moins un arrondi de tranchant (20) ou au moins une courbe de profilé de filetage présente une courbure ou un rayon de courbure (R) sensiblement variable ou non constant(e), au moins sur une certaine section.

8. Taraud (5) selon la revendication 7, dans lequel la courbure d'au moins un arrondi de tranchant (20) ou d'au moins une courbe de profilé de filetage augmente ou diminue depuis la face d'attaque (21) vers la face de dépouille (22),
ou
dans lequel la courbure d'au moins un arrondi de tranchant (20) ou d'au moins une courbe de profilé de filetage augmente jusqu'à un maximum, puis diminue à nouveau, depuis la face d'attaque (21) vers la face de dépouille (22),
ou
dans lequel la courbure d'au moins un arrondi de tranchant (20) ou d'au moins une courbe de profilé de filetage diminue jusqu'à un minimum, puis augmente à nouveau, depuis la face d'attaque (21) vers la face de dépouille (22),
ou dans lequel la courbure prédéfinie de l'arrondi de tranchant (20) est prévue dans une zone centrale des têtes tranchantes (11) et une autre courbure ou bien une forme d'arête pratiquement sans courbure est prévue dans les zones de transition vers les zones de flanc ou les angles de filetage des dents de filetage (10).

9. Taraud (5) selon l'une des revendications précédentes, dans lequel entre l'arrondi des tranchants (20) dans la face d'attaque (21) et/ou la face de dépouille (22), le tranchant correspondant s'étend de façon tangentielle ou de façon constamment différenciable ou de façon lisse,
et/ou
dans lequel la courbure ou au moins un rayon de courbure de l'arrondi des tranchants (20) se situe dans un intervalle de valeurs prédéfini qui est déterminé en fonction d'une profondeur d'arrondi (t).

10. Taraud (5) selon l'une des revendications précédentes, dans lequel les courbures des arrondis des tranchants (20) ou les courbes des profilés de filetage et/ou les profondeurs de diminution des arrondis des tranchants (20) sont fonction du diamètre du filetage et/ou fonction de l'angle d'attaque de la face d'attaque (21) et/ou de l'angle de dépouille de la face de dépouille (22) et/ou de l'angle de coin de la forme de coin idéale et/ou de l'angle d'attaque latéral de la découpe et/ou fonction du matériau dans lequel le filetage doit être produit et/ou du matériau des dents de filetage (10) et/ou de leur état comme leur structure et/ou leur dureté.

11. Taraud (5) selon l'une des revendications précédentes comprenant au moins deux rainures d'attaque (45) qui s'étendent parallèlement ou dans la direction axiale par rapport à l'axe de rotation ou qui entourent l'axe de rotation (A) avec un angle de torsion variable ou constant, étant entendu qu'au moins une et de préférence plusieurs dents de filetage (10) décalées dans la direction radiale sont respectivement agencées au niveau de chaque rainure d'attaque (45), étant entendu que les courbures des arrondis des tranchants (20) ou les courbes des profilés de filetage et/ou les profondeurs de diminution des arrondis des tranchants (20) sont choisies respectivement en fonction du nombre de rainures d'attaque (45) et/ou de l'angle de torsion des rainures d'attaque (45).

**12.** Taraud (5) selon l'une des revendications précédentes, dans lequel le nombre réel C est conforme à

$$0{,}0664 \le C \le 0{,}3692.$$

**13.** Taraud (5) selon l'une des revendications précédentes, dans lequel au moins les dents de filetage (10), au moins au niveau des têtes tranchantes (11), sont réalisées dans un métal dur ou un carbure métallique ou dans un autre matériau dur, en particulier cassant, en particulier le diamant polycristallin (PCD), le nitrure de bore cubique (CBN), le corindon, un borure de métal, en particulier un borure de magnésium, ou un carbure de borure de métal, en particulier un carbure de borure de magnésium.

**14.** Ensemble de tarauds (5) selon l'une des revendications précédentes, dans lequel les tarauds (5) se distinguent dans le nombre de dents de filetage (10) dans la zone de découpe (51) et/ou dans l'augmentation de la distance radiale maximale des têtes tranchantes (11) des dents de filetage (10) dans la zone de découpe (51) ou la fonction de distance radiale des dents de filetage (10) dans la zone de découpe (51) et/ou dans le pas de vis (P), et parmi les différents tarauds (5), les courbures des arrondis des arêtes tranchantes (20) d'au moins une partie des dents de filetage (10) se distinguent dans la zone de découpe (51), au moins dans la zone des têtes tranchantes (11), en fonction du ou des paramètres précités.

**15.** Procédé de fabrication de tarauds (5) qui peuvent tourner autour d'un axe de rotation (A), dans lequel :

a) pour chaque taraud (5), un nombre correspondant de dents de filetage (10) est produit, lesquelles présentent chacune une tête tranchante (11) située du côté extérieur en position radiale et sont agencées en décalage l'une par rapport à l'autre avec un pas de vis (P) prédéfini dans un agencement entourant l'axe de rotation (A) en forme de spirale ou d'hélice,
c) dans lequel dans une zone de découpe (51) adjacente à une extrémité du taraud (5) en direction axiale par rapport à l'axe de rotation (A), la distance radiale maximale entre les têtes tranchantes (11) des dents de filetage (10) et l'axe de rotation (A) augmente selon une fonction de distance radiale prédéfinie à mesure que la distance axiale entre les têtes tranchantes (11) et une extrémité du taraud (5) augmente,
d) dans lequel la direction radiale est définie comme étant perpendiculaire à l'axe de rotation (A) et la direction axiale est définie comme longeant ou étant parallèle à l'axe de rotation (A),
e) **caractérisé en ce qu'**au moins une partie des dents de filetage (10) sont chacune munies ou fabriquées, dans la zone de découpe (51), au moins dans la zone des têtes tranchantes (11), avec à chaque fois un arrondi de leur arête tranchante (20) ayant une courbure définie, étant entendu que :

l es courbures des arrondis des arêtes tranchantes (20) et/ou les profondeurs de diminution des arêtes tranchantes arrondies par rapport à une forme de coin idéale ou à une arête tranchante non arrondie sont chacune choisies ou ajustées en fonction e1) du nombre de dents de filetage (11) dans la zone de découpe (51) et

e2) du pas de vis (P), et
e3) de préférence également de l'augmentation de la distance radiale maximale des têtes tranchantes (11) des dents de filetage (10) dans la zone de découpe (51) ou de la fonction de distance radiale des dents de filetage (10) dans la zone de découpe (51) du taraud (5) respectif,
f) étant entendu que les rayons de courbure des arrondis du tranchant (20) d'au moins une partie des dents de filetage (10) dans la zone de découpe (51), au moins dans la zone de leur tête tranchante (11), sont choisis selon l'équation

$$R = f\,(\gamma 3) \cdot C \cdot P \,/\, Z$$

et que les profondeurs de diminution des arrondis du tranchant (20) d'au moins une partie des dents de filetage (10) dans la zone de découpe (51), au moins dans la zone de leur tête tranchante (11), sont choisies selon l'équation

$$a = C \cdot P / Z$$

étant entendu que R désigne le rayon de courbure, 2γ3 l'angle du coin, f (γ3) une fonction de l'angle du coin 2γ3, P le pas de vis (P) et Z le nombre de dents de filetage (10) dans la zone de découpe (51) et que C est un nombre réel conforme à

$$0{,}0075 \leq C \leq 0{,}7383,$$

g) étant entendu que de préférence, les dents de filetage (10) ayant des arêtes tranchantes non encore arrondies sont réalisées par meulage et/ou
étant entendu que de préférence, un procédé mécanique d'enlèvement fin de matériau, en particulier un procédé de meulage à projection ou d'attaque à projection avec un matériau abrasif, un procédé de brossage ou un procédé de projection d'eau à haute pression, est mis en oeuvre afin d'arrondir les arêtes tranchantes des dents de filetage (10).

FIG 1

54

5

53

ε

45

50

52

10

51

55

45

A

FIG 2

5

10

45

45

A

10

10

45

FIG 3

FIG 4

FIG 5

FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3021538 A
- US 7147939 B2
- US 7147413 B2
- US 7207867 B2
- EP 0887135 B1

**In der Beschreibung aufgeführte Nicht-Patentliteratur**

- Handbuch der Gewindetechnik und Frästechnik, Herausgeber: EMUGE-FRANKEN. Verlag: Publicis Corporate Publishing, 2004
- EMUGE-Handbuch. 181-298